(19) Europäisches Patentamt / European Patent Office / Office européen des brevets

(11) **EP 2 617 881 A2**

## (12) EUROPEAN PATENT APPLICATION
published in accordance with Art. 153(4) EPC

(43) Date of publication:
**24.07.2013 Bulletin 2013/30**

(21) Application number: **11825471.3**

(22) Date of filing: **16.09.2011**

(51) Int Cl.:
*D01F 6/62* (2006.01)  *D02G 3/02* (2006.01)
*D01D 5/08* (2006.01)  *D02J 1/22* (2006.01)
*D03D 15/00* (2006.01)  *D06M 15/564* (2006.01)
*D06M 11/77* (2006.01)  *D06M 15/693* (2006.01)
*D03D 1/02* (2006.01)  *B60R 21/16* (2006.01)

(86) International application number:
**PCT/KR2011/006865**

(87) International publication number:
**WO 2012/036511 (22.03.2012 Gazette 2012/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.09.2010   KR 20100092108
17.09.2010   KR 20100092107
17.09.2010   KR 20100092105**

(71) Applicant: **Kolon Industries, Inc.
Gwacheon-si, Gyeonggi-do 427-709 (KR)**

(72) Inventors:
• **KIM, Jae-Hyung
Gumi-si
Gyeongsangbuk-do 730-796 (KR)**
• **KWAK, Dong-Jin
Daegu 706-180 (KR)**

• **KIM, Ki-Jeong
Yeongcheon-si
Gyeongsangbuk-do 770-090 (KR)**
• **KIM, Hee-Jun
Daegu 701-764 (KR)**
• **YOUN, Jung-Hoon
Gumi-si
Gyeongsangbuk-do 730-140 (KR)**
• **LEE, Sang-Mok
Gumi-si
Gyeongsangbuk-do 730-020 (KR)**

(74) Representative: **Ter Meer Steinmeister & Partner
Me/bk
Mauerkircherstrasse 45
81679 München (DE)**

(54) **POLYESTER YARN AND A PRODUCTION METHOD THEREFOR**

(57)    The present invention provides a polyester yarn, wherein a room-temperature strength-elongation index ($X^0$) indicating a ratio ($T°/S°$) of tensile strength ($T°$) to tensile elongation ($S^0$) of the polyester yarn, measured at room temperature, and a primary high-humidity strength-elongation index ($X^1$) indicating a ratio ($T^1/S^1$) of tensile strength ($T^1$) to tensile elongation ($S^1$) of the polyester yarn, measured after heat-treating the polyester yarn under conditions of a temperature of 85°C and a relative humidity (RH) of 95±5% for 168 hours, are optimized in a predetermined range.

The polyester yarn is advantageous in that, since it has a low initial Young's modulus and exhibits excellent mechanical under severe conditions of high temperature and high humidity, when it is used for a fabric for an airbag, the fabric can exhibit excellent storability, shape stability and air blocking effects, and can minimize the impact applied to an occupant, thereby protecting the occupant safely.

【FIG. 4】

EP 2 617 881 A2

**Description**

**Technical Field**

The present invention relates to a polyester yarn which can be used for a fabric for an airbag, and, more particularly, to a high-strength, high-elongation and low Young's modulus polyester yarn which has excellent mechanical properties, flexibility, shape stability and the like under severe conditions of high temperature and high humidity, a method of manufacturing the same, and a fabric for an airbag using the same.

**Background Art**

Generally, an airbag is a device for protecting a driver and a passenger, in which an impact sensor detects an impact occurrence when vehicles collide with each other at a running speed of about 40 km/h or more, and then gunpowder explodes to supply gas into an airbag cushion to expand the airbag cushion, thus protecting a driver and a passenger.

A fabric for an airbag requires low air permeability for deploying at the time of collision, high strength for preventing it from being damaged and ruptured, high heat resistance, high flexibility for decreasing an impact applied to an occupant, and the like.

Particularly, an airbag used for automobiles is configured such that it is mounted in a side structure of a handle or windowpane of an automobile in a state in which it is folded in order to minimized its volume, and then it is expanded and deployed when an inflator or the like is operated.

Therefore, in order to effectively maintain the folding and packaging properties of an airbag at the time of mounting the airbag in an automobile, prevent an airbag from being damaged and ruptured, exhibit excellent airbag cushion deploying performance and minimize the impact applied to an passenger, it is important for a fabric for an airbag to have excellent mechanical properties, excellent foldability and high flexibility for decreasing the impact applied to an passenger. However, a fabric for an airbag, which maintain an excellent air blocking effect and flexibility, which can sufficiently endure the impact applied to an airbag, and which is effectively mounted in an automobile, has not yet been proposed.

Conventionally, a polyamide fiber such as nylon 66 or the like has been ever used as a raw material of a fabric for an airbag. Nylon 66 has excellent impact resistance, but is disadvantageous in that it is inferior to a polyester fiber in terms of moisture resistance, heat resistance, light resistance and shape stability, and it is expensive.

Meanwhile, Japanese Unexamined Patent Application Publication No. H04-214437 proposes a polyester fiber which can reduce such disadvantages. However, when an airbag is manufactured using such a conventional polyester yarn, it is difficult to put the airbag into an narrow space in an automobile because of high stiffness, the airbag is excessively thermally-constricted during high-temperature heat treatment because of high elasticity and low elongation, and it is difficult for the airbag to maintain sufficient mechanical properties and deploying performance under severe conditions of high temperature and high humidity.

Therefore, it is required to develop a yarn used for a fabric for an airbag, which exhibits excellent mechanical properties and air blocking effects, which has high flexibility for reducing the impact applied to an occupant, which is easily put into an narrow space in an automobile, and which maintains sufficient mechanical properties under severe conditions of high temperature and high humidity.

**Disclosure**

**Technical Problem**

The present invention intends to provide a polyester yarn which has excellent mechanical properties, flexibility and shape stability to be used for a fabric for an airbag, and which can maintain sufficient performance under severe conditions of high temperature and high humidity.

Further, the present invention intends to provide a method of manufacturing the polyester yarn.

Further, the present invention intends to provide a polyester fabric including the polyester yarn.

Further, the present invention intends to provide a method of manufacturing the polyester fabric.

Further, the present invention intends to provide an airbag for an automobile, including the polyester fabric.

**Technical Solution**

An aspect of the present invention provides a polyester yarn, wherein a room-temperature strength-elongation index ($X^0$) indicating a ratio ($T°/S°$) of tensile strength ($T°$) to tensile elongation ($S°$) of the polyester yarn, measured at room temperature; and a primary high-humidity strength-elongation index ($X^1$) indicating a ratio ($T^1/S^1$) of tensile strength

($T^1$) to tensile elongation ($S^1$) of the polyester yarn, measured after heat-treating the polyester yarn under conditions of a temperature of 85°C and a relative humidity (RH) of 95±5% for 168 hours, are represented by Calculation Formula 1 below:

$$[Calculation\ Formula\ 1]$$

$$0.65 \leq X^1/X^0 \leq 0.93$$

wherein $X^0$ is a room-temperature strength-elongation index indicating a ratio ($T°/S°$) of tensile strength ($T°$) to tensile elongation ($S°$) of the polyester yarn, measured at room temperature; and $X^1$ is a primary high-humidity strength-elongation index indicating a ratio ($T^1/S^1$) of tensile strength ($T^1$) to tensile elongation ($S^1$) of the polyester yarn, measured after heat-treating the polyester yarn under conditions of a temperature of 85°C and a relative humidity (RH) of 95±5% for 168 hours.

Another aspect of the present invention provides a method of manufacturing the polyester yarn, including the steps of: melt-spinning a polyethylene terephthalate polymer having an intrinsic viscosity of 1.2 dl/g or more at 270 to 320°C to prepare an undrawn polyester yarn; and drawing the undrawn polyester yarn.

Still another aspect of the present invention provides a polyester fabric including the polyester yarn.

The polyester fabric may have a warpwise strength-elongation index ($TI^{wa}$) of 0.18 to 0.38 measured after heat-treating the polyester fabric under conditions of a temperature of 85°C and a relative humidity (RH) of 65% for 4 hours and represented by Calculation Formula 5 below:

$$[Calculation\ Formula\ 5]$$

$$TI^{wa} = T^{wa}/(S^{wa} \times D)$$

wherein $T^{wa}$ is warpwise tensile strength (N) of the polyester fabric measured according to ISO 13934-1 (standard of the International standardization organization), $S^{wa}$ is warpwise tensile elongation (%) of the polyester fabric measured according to ISO 13934-1 (standard of the International standardization organization), and D is fineness (De) of a polyester yarn.

The polyester fabric may have a warpwise edge comb resistance index ($EI^{wa}$) of 0.15 to 0.38 measured after heat-treating the polyester fabric under conditions of a temperature of 85°C and a relative humidity (RH) of 65% for 4 hours and represented by Calculation Formula 7 below:

$$[Calculation\ Formula\ 7]$$

$$EI^{wa} = ER^{wa}/[(warp\ density + weft\ density) \times D^{1/2}]$$

wherein $ER^{wa}$ is warpwise edge comb resistance (N) of the polyester fabric measured according to ASTM D 6479 (standard of the American Society for Testing and Materials), and D is fineness (De) of the polyester fabric.

Still another aspect of the present invention provides a method of manufacturing the polyester fabric, including the steps of: weaving a polyester yarn having a fineness of 400 to 650 denier to form a grey cloth for an airbag; scouring the grey cloth for an airbag; and heat-setting the scoured grey cloth.

Still another aspect of the present invention provides an airbag for an automobile, including the polyester fabric.

**Advantageous Effects**

According to the present invention, there is provided a polyester yarn which can be used to manufacture a fabric for an airbag having excellent flexibility and foldability as well as excellent energy absorbing performance and mechanical properties at the time of deploying the airbag because its strength, elongation and the like are optimized at room temperature and under severe conditions of high temperature and high humidity.

Such a polyester yarn is a one having high strength, high elongation and low Young's modulus, and is advantageous in that, since its strength, elongation and the like are optimized at room temperature and under severe conditions of high temperature and high humidity, when it is used for a fabric for an airbag, thermal constriction of the fabric is minimized, and the fabric can exhibit excellent foldability and flexibility as well as excellent shape stability, mechanical properties and air blocking effects, so when the airbag made of the fabric is mounted in an automobile, it can be very easily put into an narrow space in the automobile and can minimize the impact applied to an occupant, thereby protecting occupant safely.

Therefore, the polyester yarn and the polyester fabric using the same can be preferably used to manufacture an airbag for an automobile.

**Description of Drawings**

FIG. 1 is a schematic view showing a process of manufacturing a polyester yarn for an airbag according to an embodiment of the present invention.

FIG. 2 shows a strength-elongation curve of a general fiber, wherein the area of the strength-elongation curve is defined as toughness (work of rupture, $J/m^3$).

FIG. 3 is a schematic view showing a scrub resistance measuring device according to ISO 5981.

FIG. 4 is a graph showing a strength-elongation curve of a polyester yarn of Example 5 of the present invention, wherein the strength and elongation thereof were measured at room temperature.

FIG. 5 is a graph showing a strength-elongation curve of a polyester yarn of Example 5 of the present invention, wherein the strength and elongation thereof were measured after heat-treating the polyester yarn under conditions of a temperature of 85°C and a relative humidity (RH) of 95±5% for 168 hours.

FIG. 6 is a graph showing a strength-elongation curve of a polyester yarn of Comparative Example 5, wherein the strength and elongation thereof were measured at room temperature.

FIG. 7 is a graph showing a strength-elongation curve of a polyester yarn of Comparative Example 5, wherein the strength and elongation thereof were measured after heat-treating the polyester yarn under conditions of a temperature of 85°C and a relative humidity (RH) of 95±5% for 168 hours.

FIG. 8 is a graph showing a strength-elongation curve of a polyester fabric of Preparation Example 3 of the present invention.

FIG. 9 is a graph showing a strength-elongation curve of a polyester fabric of Comparative Preparation Example 3.

**Best Mode**

Hereinafter, a polyester yarn and a manufacturing method thereof, a polyester fabric including the polyester yarn and a manufacturing method thereof, and an airbag for an automobile including the polyester fabric according to preferred embodiments of the present invention will be described in detail. However, the preferred embodiments are set forth to illustrate the present invention, and the scope of the present invention is not limited thereto. It will be obvious to those skilled in the art that various modifications and changes are possible within the scope of the present invention.

Additionally, as long as not particularly described in the entire specification, a description that A "includes" or "contains" B means that A includes any component (or constituent) without limitation, and the addition of another component (or constituent) is not excluded.

A polyester fabric for an airbag may be manufactured by a process including the steps of melt-spinning a polymer containing polyethylene terephthalate (hereinafter referred to as "PET") to prepare an undrawn polyester yarn, drawing the undrawn polyester yarn to obtain a polyester yarn, and weaving the polyester yarn. Therefore, the characteristics of the polyester yarn are directly or indirectly reflected in the physical properties of a polyester fabric for an airbag.

However, in order to use a polyester yarn as a yarn for an airbag instead of a polyamide fiber such as nylon 66 or the like, it is required to overcome the problems that the foldability of the polyester yarn is deteriorated due to the high Young's modulus and stiffness thereof, the physical properties of the polyester yarn are deteriorated due to the low thermal capacity thereof and the deploying performance of the polyester yarn is deteriorated due to the deterioration of the deploying performance thereof.

Particularly, in order to apply a conventional polyester yarn to a fabric for an airbag, the conventional polyester yarn must have high strength, high elongation and a high dry contraction rate, but this conventional polyester yarn does not satisfy such physical properties as strength, elongation, contraction rate and the like. As such, since the required physical properties of a conventional polyester yarn are different from those of nylon, when heat treatment is performed during a process of manufacturing a fabric for an airbag using the conventional polyester yarn, the strength, elongation and airtightness of the obtained fabric for an airbag become low, so it is difficult to exhibit excellent air blocking effects. Further, since a conventional polyester yarn has a strong molecular chain, when an airbag made of this polyester yarn is to be mounted in an automobile, it is difficult to install the airbag in the automobile. Moreover, a carboxyl end group (hereinafter referred to as "CEG") in the molecular chain of the conventional polyester yarn attacks an ester bond under conditions of high temperature and high humidity to cut the molecular chain, thus causing the deterioration of physical properties of the polyester yarn after aging it.

Therefore, the polyester yarn of the present invention can be effectively applied to a fabric for an airbag because its physical properties, such as strength, elongation and the like, can be optimized under severe conditions of high temperature and high humidity, so its stiffness can be remarkably lowered, and simultaneously its mechanical properties, such as toughness and the like as well as air blocking performance can be maintained, thereby effectively applying this polyester yarn to a fabric for an airbag.

Particularly, from the results of experiments, the present inventors found that, when a fabric for an airbag is manufactured using a polyester yarn having predetermined characteristics, the fabric for an airbag exhibits more improved foldability, shape stability, durability and air blocking effects, so an airbag made of the fabric can be easily mounted in an automobile and can maintain excellent mechanical properties, air blocking effects, airtightness and the like even under severe conditions of high temperature and high humidity.

According to an embodiment of the present invention, a polyester yarn having predetermined characteristics is provided. In such a polyester yarn, a room-temperature strength-elongation index ($X^0$) indicating a ratio ($T°/S°$) of tensile strength ($T°$, g/de) to tensile elongation ($S°$, %) of the polyester yarn, measured at room temperature, and a primary high-humidity strength-elongation index ($X^1$) indicating a ratio ($T^1/S^1$) of tensile strength ($T^1$, g/de) to tensile elongation ($S^1$, %) of the polyester yarn, measured after heat-treating the polyester yarn under conditions of a temperature of 85°C and a relative humidity (RH) of 95±5% for 168 hours, are optimized in a predetermined range.

It is preferred for such a polyester yarn to include polyethylene terephthalate (PET) as a main component. In this case, the polyester yarn may further include various additives. In order for the polyester yarn to exhibit suitable physical properties for a fabric for an airbag, the polyester yarn may include PET in an amount of 70 mol% or more, and preferably, 90 mol% or more. Hereinafter, the term "PET" means 70 mol% or more of PET as long as it is not particularly mentioned.

The polyester yarn according to an embodiment of the present invention, which is manufactured under the following melt-spinning and drawing conditions, is characterized in that a room-temperature strength-elongation index ($X^0$) indicating a ratio ($T°/S°$) of tensile strength ($T°$, g/de) to tensile elongation ($S°$, %) of the polyester yarn, measured at room temperature; and a primary high-humidity strength-elongation index ($X^1$) indicating a ratio ($T^1/S^1$) of tensile strength ($T^1$, g/de) to tensile elongation ($S^1$, %) of the polyester yarn, measured after heat-treating the polyester yarn under conditions of a temperature of 85°C and a relative humidity (RH) of 95±5% for 168 hours, are represented by Calculation Formula 1 below:

$$[\text{Calculation Formula 1}]$$

$$0.65 \leq X^1/X^0 \leq 0.93$$

wherein $X^0$ is a room-temperature strength-elongation index indicating a ratio ($T°/S°$) of tensile strength ($T°$, g/de) to tensile elongation ($S°$, %) of the polyester yarn, measured at room temperature; and $X^1$ is a primary high-humidity strength-elongation index indicating a ratio ($T^1/S^1$) of tensile strength ($T^1$, g/de) to tensile elongation ($S^1$, %) of the polyester yarn, measured after heat-treating the polyester yarn under conditions of a temperature of 85°C and a relative humidity (RH) of 95±5% for 168 hours.

Further, the polyester yarn is characterized in that a room-temperature strength-elongation index ($X^0$) indicating a ratio ($T°/S°$) of tensile strength ($T°$, g/de) to tensile elongation ($S°$, %) of the polyester yarn, measured at room temperature; and a secondary high-humidity strength-elongation index ($X^2$) indicating a ratio ($T^2/S^2$) of tensile strength ($T^2$, g/de) to tensile elongation ($S^2$, %) of the polyester yarn, measured after heat-treating the polyester yarn under conditions of a temperature of 85°C and a relative humidity (RH) of 95±5% for 360 hours, are represented by Calculation Formula 2 below:

$$[\text{Calculation Formula 2}]$$

$$0.65 \leq X^2/X^0 \leq 0.93$$

wherein $X^0$ is a room-temperature strength-elongation index indicating a ratio ($T°/S°$) of tensile strength ($T°$, g/de) to tensile elongation ($S°$, %) of the polyester yarn, measured at room temperature; and $X^2$ is a secondary high-humidity strength-elongation index indicating a ratio ($T^2/S^2$) of tensile strength ($T^2$, g/de) to tensile elongation ($S^2$, %) of the polyester yarn, measured after heat-treating the polyester yarn under conditions of a temperature of 85°C and a relative humidity (RH) of 95±5% for 360 hours.

Further, the polyester yarn is characterized in that a room-temperature strength-elongation index ($X^0$) indicating a ratio ($T°/S°$) of tensile strength ($T°$, g/de) to tensile elongation ($S°$, %) of the polyester yarn, measured at room temperature; and a tertiary high-humidity strength-elongation index ($X^3$) indicating a ratio ($T^3/S^3$) of tensile strength ($T^3$, g/de) to tensile elongation ($S^3$, %) of the polyester yarn, measured after heat-treating the polyester yarn under conditions of a temperature of 85°C and a relative humidity (RH) of 95±5% for 504 hours, are represented by Calculation Formula 3 below:

$$[\text{Calculation Formula 3}]$$

$$0.65 \leq X^3/X^0 \leq 0.93$$

wherein $X^0$ is a room-temperature strength-elongation index indicating a ratio ($T°/S°$) of tensile strength ($T°$, g/de) to tensile elongation ($S°$, %) of the polyester yarn, measured at room temperature; and $X^3$ is a tertiary high-humidity strength-elongation index indicating a ratio ($T^3/S^3$) of tensile strength ($T^3$, g/de) to tensile elongation ($S^3$, %) of the polyester yarn, measured after heat-treating the polyester yarn under conditions of a temperature of 85°C and a relative humidity (RH) of 95±5% for 504 hours.

As described above, since a general polyester has a strong molecular chain and has a high stiffness molecular structure, it exhibits a high Young's modulus, and when an airbag made of this polyester yarn is used, the foldability and storability of the airbag are remarkably deteriorated, and thus it is difficult to store the airbag in a narrow space of the automobile. Moreover, a carboxyl end group (hereinafter referred to as "CEG") in the molecular chain of polyester attacks an ester bond under conditions of high temperature and high humidity to cut the molecular chain, thus causing deterioration of physical properties of the polyester yarn after aging it. However, the polyester yarn of the present invention, obtained by melt-spinning and drawing processes using high-viscosity chips, has high strength and a low Young's modulus, and exhibits excellent mechanical properties under severe conditions of high temperature and high humidity compared to commonly-known industrial polyester yarns. Particularly, the polyester yarn of the present invention is characterized in that it has a low initial Young's modulus and is minimally drawn.

That is, in the room-temperature strength-elongation index ($X^0$) indicating a ratio ($T°/S°$) of tensile strength ($T°$, g/de) to tensile elongation ($S°$, %) of the polyester yarn, measured at room temperature (25°C and 65±5% RH), and the primary, secondary and tertiary high-humidity strength-elongation indices ($X^1$, $X^2$, $X^3$) respectively indicating ratios ($T^1/S^1$, $T^2/S^2$, $T^3/S^3$) of tensile strengths ($T^1$, $T^2$, $T^3$, g/de) to tensile elongations ($S^1$, $S^2$, $S^3$, %) of the polyester yarn, measured after heat-treating the polyester yarn under conditions of a temperature of 85°C and a relative humidity (RH) of 95±5% for 168, 360 and 504 hours, each of the ratios ($X^1/X^0$, $X^2/X^0$, $X^3/X^0$) of the primary, secondary and tertiary high-humidity strength-elongation indices ($X^1$, $X^2$, $X^3$) to the room-temperature strength-elongation index ($X^0$) may be 0.65 to 0.93, and preferably 0.67 to 0.91, as represented by Calculation Formulae 1, 2 and 3 above. Such characteristics of the polyester yarn can be accomplished by optimizing melt-spinning and drawing conditions during a process of manufacturing the polyester yarn to optimize the tensile strength and tensile elongation of the polyester yarn at room temperature and under severe conditions of high temperature and high humidity. In the case of a polyester yarn manufactured in this way, the decrease in intrinsic viscosity (IV) of the polyester yarn at the time of melt-spinning is minimized, and the toughness of the polyester yarn is improved by properly controlling drawing conditions, so a fabric for an airbag made of the polyester yarn having high strength, high elongation and low Young's modulus can overcome the problem of high stiffness of a conventional PET fabric, and an airbag made of the fabric can exhibit excellent foldability, flexibility and storability.

In the present invention, in order for an airbag to instantaneously resist high-temperature and high-pressure inflator gas generated at the time of operating an airbag, the toughness of a yarn constituting the airbag is adjusted in an optimum range, thus improving the mechanical properties and foldability of the airbag. Further, in order for an airbag to have excellent airtightness and foldability such that instantaneous impact energy of exhaust gas generated by the explosion of gunpowder in the airbag is absorbed early and safely and simultaneously the airbag is effectively deployed, it is also required to adjust the Young's modulus and DPF of a yarn constituting the airbag. Particularly, considering that the deploying performance of the air is evaluated after treating an airbag module for a long period of time under severe conditions of high temperature and high humidity, it is required that the ratio of the strength-elongation index of the polyester yarn, measured after heat-treating it under severe conditions of high temperature and high humidity, to the strength-elongation index of the polyester yarn, measured at room temperature, satisfies the above-mentioned range.

Particularly, as represented by Calculation Formulae 1, 2 and 3 above, each of the ratios ($X^1/X^0$, $X^2/X^0$, $X^3/X^0$) of the primary, secondary and tertiary high-humidity strength-elongation indices ($X^1$, $X^2$, $X^3$) of the polyester yarn to the room-temperature strength-elongation index ($X^0$) of the polyester yarn may be 0.65 or more in terms of maintaining excellent strength properties of a fabric for an airbag, and may be 0.93 or less in terms of securing excellent foldability of a fabric for an airbag. As represented by Calculation Formulae 1, 2 and 3 above, when each of the ratios ($X^1/X^0$, $X^2/X^0$, $X^3/X^0$) of the primary, secondary and tertiary high-humidity strength-elongation indices thereof to the room-temperature strength-elongation index thereof does not satisfy the above range, at the time of applying the polyester yarn to a fabric for an airbag, the toughness of the fabric may be insufficient or the stiffness thereof may be high. Further, when each of the ratios ($X^1/X^0$, $X^2/X^0$, $X^3/X^0$) of the primary, secondary and tertiary high-humidity strength-elongation indices thereof to the room-temperature strength-elongation index thereof is less than 0.65, the strength properties of the fabric for an airbag rapidly deteriorate, and thus this fabric may be difficult to use as a fabric for an airbag. In contrast, when each of the ratios ($X^1/X^0$, $X^2/X^0$, $X^3/X^0$) of the primary, secondary and tertiary high-humidity strength-elongation indices thereof to the room-temperature strength-elongation index thereof is more than 0.93, the fabric is advantageous in terms of toughness, but is disadvantageous in terms of foldability because it becomes stiff.

The room temperature strength-elongation index of the polyester yarn, indicated by $X^0$ in Calculation Formulae 1, 2 and 3, that is, the ratio ($T°/S°$) of tensile strength ($T°$) to tensile elongation ($S°$) of the polyester yarn, measured at room temperature, may be 0.35 to 0.70, and preferably, 0.38 to 0.68. Here, the room temperature tensile strength of the polyester yarn, indicated by $T°$, that is, the tensile strength of the polyester yarn, measured at room temperature (25°C and 65±5% RH) without the polyester yarn being heat-treated, may be 8.9 g/de to 11.0 g/de, preferably 9.0 g/de to 10.0 g/de, and more preferably 9.1 g/de to 9.8 g/de. Further, the room temperature tensile elongation of the polyester yarn, indicated by $S^0$, that is, the tensile elongation of the polyester yarn, measured at room temperature (25°C and 65±5% RH) without the polyester yarn being heat-treated, may be 15% to 30%, preferably 16% to 26%, and more preferably 17% to 25%.

Further, each of the primary, secondary and tertiary high-humidity strength-elongation indices, indicated by $X^1$, $X^2$ and $X^3$, respectively, in Calculation Formulae 1, 2 and 3, that is, each of the ratios ($T^1/S^1$, $T^2/S^2$, $T^3/S^3$) of tensile strengths ($T^1$, $T^2$, $T^3$) to tensile elongations ($S^1$, $S^2$, $S^3$) of the polyester yarn, measured after heat-treating the polyester yarn under conditions of a temperature of 85°C and a relative humidity (RH) of 95±5% for 168, 360 and 504 hours, may be 0.65 to 0.93, and preferably 0.67 to 0.91. Here, each of the primary, secondary and tertiary high-humidity tensile strengths of the polyester yarn, indicated by $T^1$, $T^2$ and $T^3$, respectively, that is, each of the tensile strengths of the polyester yarn, measured after heat-treating the polyester yarn under conditions of a temperature of 85°C and a relative humidity (RH) of 95±5% for 168, 360 and 504 hours, may be 8.2 g/de to 9.5 g/de, and preferably 8.3 g/de to 9.3 g/de. Further, each of the primary, secondary and tertiary high-humidity tensile elongations of the polyester yarn, indicated by $S^1$, $S^2$ and $S^3$, respectively, that is, each of the tensile elongations of the polyester yarn, measured after heat-treating the polyester yarn under conditions of a temperature of 85°C and a relative humidity (RH) of 95±5% for 168, 360 and 504 hours, may be 16% to 30%, and preferably 18% to 28%.

Each of the tensile strengths of the polyester yarn, measured after heat-treating the polyester yarn under conditions of a temperature of 85°C and a relative humidity (RH) of 95±5% for 168, 360 and 504 hours, may be 90% or more or 90% to 100%, and preferably 91.5% or more or 91.5% to 100% of the tensile strength of the polyester yarn, measured at room temperature (25°C and 65±5 % RH). Further, each of the tensile elongations of the polyester yarn, measured after heat-treating the polyester yarn under conditions of a temperature of 85°C and a relative humidity (RH) of 95±5% for 168, 360 and 504 hours, may be 100% or more or 100% to 200%, preferably 103% or more or 103% to 180%, and more preferably 105% or more or 105% to 160% of the tensile elongation of the polyester yarn, measured at room temperature (25°C and 65±5 % RH).

As described above, even after the polyester yarn of the present invention is heat-treated for a long period of time under severe conditions of high temperature (85°C) and high humidity (95±5% RH), the strength of the polyester yarn decreases at a minimum, and simultaneously the elongation thereof increases, so the strength-elongation ratio thereof is maintained in an optimum range, with the result that, when this polyester yarn is formed into a fabric for an airbag, the fabric for an airbag has high toughness, and thus this fabric can provide improved air blocking effects as well as excellent mechanical properties. However, when each of the tensile strength, tensile elongation and strength-elongation index of the polyester yarn are not maintained at a minimum value or more, at the time of forming the polyester yarn into a fabric for an airbag, the toughness of the fabric for an airbag is excessively insufficient, thus causing a problem of a cushion being torn when an airbag being deployed. In contrast, when each of the tensile strength, tensile elongation and strength-elongation index of the polyester yarn exceeds a maximum value, at the time of forming the polyester yarn into a fabric for an airbag, the stiffness of the fabric for an airbag excessively increases, thus causing a problem of the foldability of an airbag becoming poor.

Meanwhile, in the present invention, in order to absorb impact energy instantaneously generated at the time of operating an airbag, the strength-elongation curve of a polyester yarn constituting an airbag is adjusted in an optimum range, thus improving both the mechanical properties and foldability of the airbag. Further, in order for an airbag to have excellent airtightness and foldability such that instantaneous impact energy of exhaust gas generated by the explosion of gunpowder in the airbag is absorbed early and safely and simultaneously the airbag is effectively deployed, a polyester yarn having high strength, high elongation and low initial Young's modulus is needed. Particularly, considering that heat treatment is performed in the process of manufacturing a fabric for an airbag, it required that the strength-elongation curve of the polyester yarn heat-treated under a predetermined condition satisfies the following modulus range.

In this aspect, each of the Young's moduli of the polyester yarn, measured after heat-treating the polyester yarn under conditions of a temperature of 85°C and a relative humidity (RH) of 95±5% for 168, 360 and 504 hours according to ASTM D 885 (standard of the American Society for Testing and Materials), may be 45 to 70 g/de, and preferably 50 to 67 g/de when the elongation thereof is 1%, that is, at the spot to which the polyester yarn is extended by 1%, and may be 30 to 52 g/de, and preferably 34 to 50 g/de when the elongation thereof is 2%, that is, at the spot to which the polyester yarn is extended by 2%. Further, each of the Young's moduli of the polyester yarn, measured at room temperature (25°C and 65±5% RH) for 168, 360 and 504 hours according to ASTM D 885 (standard of the American Society for Testing and Materials), may be 60 to 110 g/de, and preferably 75 to 105 g/de when the elongation thereof is 1%, that is, at the spot to which the polyester yarn is extended by 1%, and may be 50 to 87 g/de, and preferably 55 to 85 g/de when the elongation thereof is 2%, that is, at the spot to which the polyester yarn is extended by 2%. As described above, comparing the polyester yarn of the present invention with a conventional general industrial polyester yarn, the Young's moduli of the polyester yarn, measured after heat treatment and at room temperature at the spot to which the polyester yarn is extended by 1%, are 53 g/de or more and 90 g/de or more, respectively, and are 53 g/de or more and 90 g/de or more at the spot to which the polyester yarn is extended by 2%, respectively. Therefore, the polyester yarn may have a very low Young's modulus after heat treatment as well as at room temperature.

In this case, the Young's modulus of the polyester yarn, which is an elastic coefficient obtained from a gradient of an elastic region of a stress-deformation line obtained at the time of tensile testing, is a value corresponding to the ratio of elongation to deformation of the polyester yarn when both sides thereof are extended. When the Young's modulus of the polyester yarn is high, the elasticity of a fabric made thereof may become high, but the stiffness thereof may become poor. When the Young's modulus of the polyester yarn is excessively low, the stiffness of the fabric is good, but the elastic recovery thereof may become low, thus deteriorating the toughness thereof. As such, a fabric for an airbag, made of the polyester yarn having a low initial Young's modulus compared to that of a conventional polyester yarn after heat treatment as well as at room temperature, can overcome the problem of a conventional polyester fabric having high stiffness, and enables an airbag to exhibit excellent foldability, flexibility and storability.

Simultaneously, the polyester yarn of the present invention may have improved intrinsic viscosity compared to that of a commonly-known polyester yarn. That is, the polyester yarn may have an intrinsic viscosity of 0.8 dl/g or more or 0.8 to 1.2 dl/g, preferably 0.85 dl/g or more or 0.85 to 1.15 dl/g, and more preferably 0.9 dl/g or more or 0.9 to 1.1 dl/g. Preferably, the intrinsic viscosity of the polyester yarn may be present in this range such that the polyester yarn is not thermally deformed during a coating process for forming the polyester yarn into an airbag.

Only when the intrinsic viscosity of the polyester yarn is 0.8 dl/g or more, the elongation of the polyester yarn becomes low, thus satisfying the required strength of a fabric for an airbag, and otherwise, the elongation thereof becomes high, thus not exhibiting the physical properties of a fabric for an airbag. As such, when the elongation of the polyester yarn is high, the degree of orientation thereof increases, and thus the Young's modulus thereof becomes high, so it is difficult to realize a fabric having excellent foldability. Therefore, it is preferred that the intrinsic viscosity of the polyester yarn be maintained at 0.8 dl/g or more such that the elongation thereof become low, thus realizing a fabric having a low Young's modulus. Further, when the intrinsic viscosity of the polyester yarn is 1.2 dl/g or more, the tension of the polyester yarn increases, thus causing process problems, so it is more preferred that the intrinsic viscosity thereof be 1.2 dl/g or less. Particularly, when the intrinsic viscosity of the polyester yarn of the present invention is maintained high, the elongation thereof becomes low, thus allowing a fabric for an airbag to have sufficient mechanical properties, impact resistance and toughness as well as to have low stiffness.

Therefore, it is possible to manufacture a fabric for an airbag exhibiting excellent mechanical properties, storability, shape stability, impact resistance and air blocking effects using the polyester yarn having a low initial Young's modulus and high elongation. Accordingly, when this polyester yarn is used, a fabric for an airbag having excellent impact resistance, shape stability, mechanical properties and airtightness as well as low stiffness and high foldability, flexibility and storability can be obtained. Such a polyester fabric for an airbag exhibits excellent mechanical properties, shape stability and air blocking effects, provides excellent foldability and storability to an airbag when the airbag mounted in the narrow space of an automobile, and allows an airbag to have high flexibility to minimize the impact applied to a passenger, thus safely protecting the passenger.

Further, the polyester yarn of the present invention, which is manufactured by the following melt-spinning and drawing conditions, may include a carboxyl end group (CEG) in an amount of 45 meq/kg or less, preferably 40 meq/kg or less, and more preferably 35 meq/kg or less, which is very low compared to that of a commonly-known polyester yarn. Further, the polyester yarn may include a carboxyl end group (CEG) in amounts of 60 meq/kg or less, preferably 50 meq/kg or less, and more preferably 45 meq/kg or less, each of which was measured after heat-treating the polyester yarn for 168, 360 and 504 hours under conditions of 85°C and 95±5% RH. The carboxyl end group (CEG) in a molecular chain of polyester attacks an ester bond under conditions of high temperature and high humidity to cause the molecular chain to be cut, thus deteriorating the physical properties of the polyester yarn after aging. Particularly, in the case where the amount of CEG is more than 45 meq/kg, when the polyester yarn is formed into a fabric for an airbag, an ester bond is cut by CEG under a condition of high humidity to cause the physical properties of the fabric for an airbag to be deteriorated, so it is preferred that the amount of CEG be 45 meq/kg or less. Therefore, in order to prevent the physical properties of the fabric for an airbag from being deteriorated, each of the amounts of CFG in the polyester yarn, measured after heat-treating the polyester yarn for 168, 360 and 504 hours under conditions of 85°C and 95±5% RH, may be 60 meq/kg or less.

Meanwhile, as described above, the polyester yarn according to an embodiment of the present invention may have a tensile strength of 8.2 g/de to 9.5 g/de, and preferably 8.35 g/de to 9.25 g/de, which was measured after heat-treating the polyester yarn under conditions of 85°C and 95±5% RH for 168, 360 and 504 hours, and may have a tensile elongation of 16% to 30%, and preferably 18% to 28%, which was measured after heat-treating the polyester yarn under conditions of 85°C and 95±5% RH for 168, 360 and 504 hours. Further, the polyester yarn may have a tensile strength of 8.9 g/d to 11.0 g/d, preferably 9.0 g/d to 10 g/d and more preferably 9.1 g/d to 9.8 g/d, which was measured at room temperature (25°C and 65±5 %RH) without heat treatment, and may have a tensile elongation of 15% to 30%, preferably 16% to 26% and more preferably 17% to 25%, which was measured at room temperature (25°C and 65±5 %RH) without heat treatment.

The polyester yarn may have a toughness of 70 J/m$^3$ to 120 J/m$^3$, which is represented by Calculation Formula 4 below:

$$[\text{Calculation Formula 4}]$$

$$\text{Toughness (work of rupture)} = \int_0^{strain} F \cdot dl$$

wherein F indicates a load applied when a length of the polyester yarn increases by dl, and dl indicates the increased length of the polyester yarn.

The polyester yarn has high toughness (work of rupture) compared to that of a conventional polyester yarn, so it can effectively absorb and endure the energy of high-temperature and high-pressure gas. Particularly, the polyester yarn may have a toughness of 70 J/m$^3$ to 120 J/m$^3$, and preferably 75 J/m$^3$ to 110 J/m$^3$, which was calculated by Calculation Formula 4 above using the strength-elongation curve thereof obtained after heat-treating the polyester yarn at 185°C for 2 minutes, and may have a toughness of 70 J/m$^3$ to 120 J/m$^3$, and preferably 85 J/m$^3$ to 115 J/m$^3$, which was measured at room temperature. Since the polyester yarn of the present invention has a low initial Young's modulus and high strength and high elongation, the deterioration in tensile strength thereof is minimized and the elongation thereof is improved even after heat-treating the polyester yarn under conditions of 85°C and 95±5% RH for 168, 360 and 504 hours, so the polyester yarn can exhibit excellent toughness in the same range as the toughness measured at room temperature (25°C and 65±5% RH). However, if necessary, the toughness of the polyester yarn, measured after heat-treating the polyester yarn under conditions of 85°C and 95±5% RH for 168, 360 and 504 hours, may be 90% or more, preferably 93% or more and more preferably 95% or more with respect to the toughness of the polyester yarn, measured at room temperature. As such, since the polyester yarn of the present invention exhibits high toughness (work of rupture) both at room temperature and after heat treatment, it can effectively absorb and endure the energy of high-temperature and high-pressure gas, and thus it can be effectively used as a yarn for an airbag.

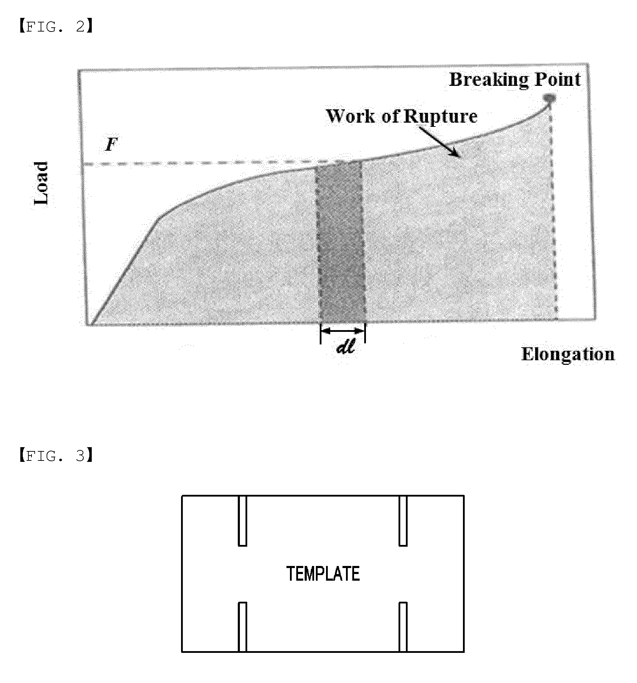

In this case, as represented by Calculation Formula 4 above, the term "toughness" is energy consumed until a fiber (here, a fiber includes a yarn or a fabric) is cut by tension, and means the resistance of a fiber to a sudden impact. When the length of a fiber is increased from 1 to 1+dl by a load (F), the done work is F·dl, and thus the toughness required to cut the fiber is represented by Calculation Formula 4 above. That is, the toughness indicates the section area in the strong-elongation curve of a yarn and a fabric (refer to FIG. 2), and as the strength and elongation of a yarn used for a fabric increase, the toughness of the fabric becomes high. Particularly, when the toughness of a fabric for an airbag becomes low, the fabric's resistance for sufficiently absorbing the instantaneous impact of a high-temperature and high-pressure inflator occurring at the time of deploying an airbag becomes low, thus causing the fabric for an airbag to be easily torn. Therefore, when the toughness of the polyester yarn of the present invention is, for example, less than 70 kJ/m$^3$, it may be difficult to use this polyester yarn for a fabric for an airbag.

As described above, when the intrinsic viscosity, initial Young's modulus and elongation of the polyester yarn of the present invention are optimized, the polyester yarn can secure high strength and excellent physical properties and can exhibit excellent performance when it is formed into a fabric for an airbag.

In particular, the polyester yarn according to an embodiment of the present invention may have a dry contraction rate of 1.0% or more or 1.0% to 10%, preferably 1.5% or more or 1.5% to 8.0%, and more preferably 2.0% or more or 2.0% to 6.0%, which was measured at room temperature with heat treatment. As such, when the dry contraction rate of the polyester yarn is optimized, a fabric having high strength and flexibility can be obtained due to the high strength, high elongation and low Young's modulus of the polyester yarn, and the air permeability of the fabric can be effectively controlled and the mechanical properties, such as edge comb resistance and the like, of the fabric can be improved because the polyester yarn has excellent contraction characteristics.

The polyester yarn may have a contraction stress of 0.005 to 0.075 g/d at 150°C corresponding to laminate coating temperature of a fabric, and may have a contraction stress of 0.005 to 0.075 g/d at 200°C corresponding to sol coating temperature of a fabric. That is, when each of the contraction stresses at 150°C and 200°C is 0.005 g/d or more, it is possible to prevent a fabric from becoming slack by heat during a coating process, and when each of the contraction stresses at 150°C and 200°C is 0.075 g/d or less, the relaxation stress of a fabric can be decreased when the fabric is cooled at room temperature after the coating process. The contraction stress of the polyester yarn is based on the value measured under a fixed load of 0.10 g/d.

As such, in order to prevent the polyester yarn from being deformed during a heat treatment process such as a coating process or the like, the polyester yarn may have a crystallinity of 40% to 55%, preferably 41% to 52% and more preferably 41% to 50%. When the polyester yarn is applied to a fabric for an airbag, the crystallinity of the polyester yarn must be 40% or more to maintain the thermal shape stability of the fabric. When the crystallinity thereof is more than 55%, there is a problem in that the impact absorbing performance of the fabric is deteriorated because the noncrystalline region of the polyester yarn is decreased. Therefore, it is preferred that the crystallinity of the polyester yarn be 55% or less.

Further, the polyester yarn may have a single yarn linear density of 2.5 to 6.8 DPF (Denier Per Filament), and preferably 2.92 to 4.55 DPF. In order for the polyester yarn to be effectively used for a fabric for an airbag, it must maintain low fineness and high strength in terms of the performance of folding an airbag cushion and the performance of absorbing high-temperature and high-pressure energy occurring when an airbag is deployed. Therefore, the total linear density of the applicable polyester yarn may be 400 to 650 denier, preferably 400 to 650 denier, and more preferably 420 to 630 denier. When the number of filaments of the polyester yarn is large, the polyester yarn becomes soft to the touch, but when the number of filaments thereof is excessively large, the spinnability thereof becomes poor. Therefore, it is preferred that the number of filaments thereof be 96 to 160.

Meanwhile, the above-mentioned polyester yarn according to an embodiment of the present invention may be manufactured by a method including the steps of melt-spinning PET to prepare an undrawn polyester yarn, and drawing the undrawn polyester yarn. As described above, a polyester yarn having the above-mentioned physical properties can be manufactured by directly and indirectly reflecting the specific conditions or procedures in each of the steps in the physical properties of the polyester yarn.

Particularly, it was found by the above-mentioned process optimization that, in a room-temperature strength-elongation index ($X^0$) indicating a ratio ($T°/S°$) of tensile strength ($T°$) to tensile elongation ($S°$) of the polyester yarn, measured at room temperature, and a primary high-humidity strength-elongation index ($X^1$) indicating a ratio ($T^1/S^1$) of tensile strength ($T^1$) to tensile elongation ($S^1$) of the polyester yarn, measured after heat-treating the polyester yarn under conditions of a temperature of 85°C and a relative humidity (RH) of 95±5% for 168 hours, a polyester yarn having a ratio ($X^1/X^0$) of the primary high-humidity strength-elongation index ($X^1$) to the room-temperature strength-elongation index ($X^0$) of 0.65 to 0.93 can be obtained. Further, in the present invention, it was found that the number of carboxyl end groups (CEGs), existing as acids under a condition of high humidity to cause the basic molecular chain of a polyester yarn to be cut, can be minimized by the optimization of melt-spinning and drawing processes. Therefore, since such a polyester yarn exhibits both a low initial Young's modulus and high elongation, it can be suitably applied to a fabric for an airbag having excellent mechanical properties, storability, shape stability, impact resistance and air blocking effects.

Hereinafter, a method of manufacturing a polyester yarn will be described in more detail with respect to each step.

The method of manufacturing the polyester yarn includes the steps of: melt-spinning a polyethylene terephthalate polymer having an intrinsic viscosity of 1.2 dl/g or more at 270 to 320°C to prepare an undrawn polyester yarn; and drawing the undrawn polyester yarn.

First, the melt-spinning and drawing processes according to the present invention will be briefly described with reference to the attached drawings such that it can be easily carried out by those skilled in the art.

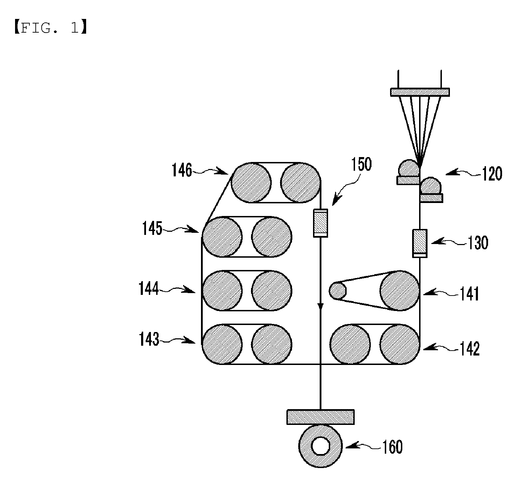

FIG. 1 is a schematic view showing a process of manufacturing a polyester yarn for an airbag, including the steps of melt-spinning and drawing, according to an embodiment of the present invention. As shown in FIG. 1, in the method of manufacturing a polyester yarn for an airbag according to the present invention, a polyester chip is melted, the molten polyester chip is spun by a spinning nozzle and cooled by quenching air to prepare a undrawn yarn, an emulsion is provided to the undrawn yarn using an emulsifying roll (or oil jet) 120, and then the emulsion provided to the undrawn yarn is uniformly dispersed at a predetermined pressure using a pre-interlacer 130. Subsequently, the undrawn yarn is drawn by multi-step drawing rollers 141 to 146, the drawn yarns are intermingled at a predetermined pressure by a second interlacer 150, and then the intermingled drawn yarn is rolled by a winding roller 160, thus producing a polyester yarn.

Meanwhile, in the method of the present invention, first, a high-viscosity polymer including polyethylene terephthalate (PET) is melt-spun to prepare an undrawn polyester yarn.

In this case, in order to obtain an undrawn polyester yarn having a low initial Young's modulus and high elongation, the melt-spinning process may be performed at low temperature such that the thermal cracking of the PET polymer is minimized. Particularly, in order to minimize the deterioration in physical properties of the PET polymer, that is, in order for the PET polymer to maintain high viscosity and low CET content, the melt-spinning process may be performed at a low temperature, for example, 270 to 320°C, preferably 273 to 315°C, more preferably 275 to 310°C, and still more preferably 280 to 300 °C. Here, spinning temperature designates the extruder's temperature. When the melt-spinning process is performed at higher than 320°C, a large amount of the PET polymer is thermally cracked, so the intrinsic viscosity thereof becomes low, with the result that the molecular weight thereof decreases, and the CET content thereof increases, thereby causing the physical properties of the obtained polyester yarn to be deteriorated by the damage to the surface of the polyester yarn, which is not preferable. In contrast, when the melt-spinning process is performed at higher than 270 °C, the PET polymer cannot be easily melted, and the spinnability of the PET polymer may be deteriorated due to N/Z surface cooling. Therefore, it is preferred that the melt-spinning process be performed in the above temperature range.

From the test results, it was found that, when the melt-spinning process is performed at such a low temperature, the decomposition of the PET polymer is minimized to maintain high viscosity and high molecular weight, and thus a high-strength polyester yarn can be obtained in a subsequent drawing process without applying a high draw ratio, so the Young's modulus of thereof can be effectively lowered by the drawing process, thereby obtaining a polyester yarn satisfying the above-mentioned physical properties.

Further, in the melt-spinning process, in terms of minimizing the decomposition of the PET polymer, in order to perform the melt-spinning process under low spinning tension, that is, in order to minimize spinning tension, for example, the spinning rate of the PET polymer can be adjusted in the range of 300 to 1,000 m/min, and preferably 350 to 700 m/min. As such, the process of melt-spinning the PET polymer is selectively performed under low spinning tension and a low spinning rate, so the decomposition of the PET polymer can be further minimized.

Meanwhile, the undrawn yarn obtained by such a melt-spinning process may have an intrinsic viscosity of 0.8 dl/g or more or 0.8 to 1.2 dl/g, preferably 0.85 dl/g or more or 0.85 to 1.15 dl/g, and more preferably 0.9 dl/g or more or 0.9 to 1.1 dl/g. Further, the amount of CEG in the molecule of the undrawn yarn obtained by the low-temperature melt-spinning may be 45 meq/kg or less, preferably 40 meq/kg or less, and more preferably 35 meq/kg. The amount of CEG in the molecule of the undrawn yarn can be maintained at the same level as that of CEG in the molecule of a drawn yarn obtained by performing a subsequent drawing process, that is, that of CEG in the molecule of a polyester yarn.

Particularly, as described above, in order to manufacture a polyester yarn having high strength and a low Young's modulus, it is preferred that, in a process of preparing an undrawn yarn, the high-viscosity range of a high-viscosity PET polymer having an intrinsic viscosity of 1.2 dl/g or more or 1.2 to 2.0 dl/g, and preferably 1.25 dl/g or more or 1.25 to 1.85 dl/g is maintained by melt-spinning and drawing processes to effectively exhibit high strength at a low draw ratio, thus effectively decreasing the Young's modulus of the undrawn yarn. However, in order to prevent the molecular chain of the PET polymer from being cut by the increase in melting temperature of the PET polymer and to prevent spinning pressure from being increased by the amount of the PET polymer discharged from a spinning machine, it is more preferred that a PET polymer having an intrinsic viscosity of 2.0 dl/g or less be used. The polyester yarn of the present invention is characterized in that it is not easily decomposed even under conditions of high temperature and high humidity because the molecular weight of the used high-viscosity PET polymer is increased, and in that it can exhibit excellent physical properties because the carboxyl end groups (CEGs) located at both ends of the PET polymer are not easily decomposed.

Meanwhile, in order for a fabric for an airbag made of this polyester yarn to maintain excellent physical properties even under conditions of high temperature and high humidity, it is preferred that the amount of CEG in the PET polymer be 30 meq/kg. Here, when the amount of CEG in the PET polymer is maintained in a low range even after melt-spinning and drawing processes, the finally manufactured polyester yarn can exhibit excellent physical properties such as high strength, excellent shape stability, excellent mechanical properties and the like under severe conditions. In this aspect, when the amount of CEG in the PET chip is more than 30 meq/kg, the amount of CEG in the molecule of the polyester yarn finally manufactured by melt-spinning and drawing processes is excessively increased to such a degree of more than 30 to 45 meq/kg, and an ester bond is cut by CEG under a condition of high humidity, thus causing the physical properties of the polyester yarn itself and the fabric made thereof to be deteriorated.

Particularly, as described above, when the thermal decomposition of the PET polymer having high viscosity and low CEG content is suppressed by melt-spinning the PET polymer under a condition of low temperature, the difference in intrinsic viscosity between the PET polymer and the polyester yarn and the difference in CEG content therebetween can be minimized. For example, melt-spinning and subsequent processes may be performed such that the difference in intrinsic viscosity between the PET polymer and the polyester yarn is 0.7 dl/g or less or 0 to 0.7 dl/g, and preferably 0.5 dl/g or less or 0.1 to 0.5 dl/g. Further, the melt-spinning and subsequent processes may be performed such that the difference in the content of CEG in the molecule between the PET polymer and the polyester yarn is 20 meq/kg or less or 0 to 20 meq/kg, and preferably 15 meq/kg or less or 3 to 15 meq/kg.

As such, in the present invention, when the decrease in intrinsic viscosity of the PET polymer and the increase in CEG content thereof are suppressed to the highest degree, excellent mechanical properties of the polyester yarn can be maintained, and simultaneously high elongation thereof can be secured, thus manufacturing a high-strength and low Young's modulus polyester yarn suitable for a fabric for an airbag.

It is preferred that the PET chip be spun by a spinning nozzle designed such that the linear density of a monofilament is 2.5 to 6.8 DPF, and preferably 2.92 to 4.55 DPF. That is, it is preferred that the linear density of a monofilament must be 2.5 DPF or more in order to reduce the possibility of a monofilament being cut during spinning and the possibility of a monofilament being cut by interference during cooling, and that the linear density of a monofilament must be 6.8 DPF or less in order to increase cooling efficiency.

Further, after the PET chip is melt-spun, a cooling process is performed to prepare an undrawn polyester yarn. The cooling process may be performed by applying cooling air at 15 to 60°C, and the flow rate of the cooling air may be adjusted to 0.4 to 1.5 m/s. By this means, an undrawn polyester yarn having physical properties according to an embodiment of the present invention can be more easily prepared.

Meanwhile, after an undrawn polyester yarn is prepared by a melt-spinning process, the prepared undrawn polyester yarn is drawn to manufacture a polyester yarn. In this case, the process of drawing the undrawn polyester yarn may be performed under a condition of a total draw ratio of 5.0 to 6.5, and preferably 5.0 to 6.2. The undrawn polyester yarn is present in a state in which the high intrinsic viscosity and low initial Young's modulus thereof are maintained and the amount of CEG in the molecule thereof is minimized. Therefore, when the process of drawing the undrawn polyester yarn is performed at a high draw ratio of more than 6.5, the undrawn polyester yarn is excessively drawn, so the manufactured polyester yarn may be cut or mowed and may have low elongation and a high Young's modulus because of high fiber orientation. Particularly, in the case where the elongation of the polyester yarn decreases and the Young's modulus thereof increases at such a high draw ratio, when this polyester yarn is applied to a fabric for an airbag, the foldability and storability of the fabric made thereof may become poor. Conversely, when the process of drawing the undrawn polyester yarn is performed at a relatively low draw ratio, the strength of the manufactured polyester yarn may partially decrease. However, in terms of physical properties, when the process of drawing the undrawn polyester yarn is performed at a draw ratio of 5.0 or more, a high-strength and low Young's modulus polyester yarn suitable for being applied to a fabric for an airbag can be manufactured. Therefore, it is preferred that the process of drawing the undrawn polyester yarn be performed at a draw ratio of 5.0 to 6.5.

According to another embodiment of the present invention, in order to manufacture a polyester yarn satisfying high strength and low contraction and having a low Young's modulus by direct spinning and drawing processes, the method of manufacturing a polyester yarn may further includes the steps of drawing, thermally fixing, relaxing and winding the undrawn polyester yarn using a godet roller after the step of melt-spinning the high-viscosity PET polymer chip.

The drawing process may be performed after passing the undrawn polyester yarn through a godet roller with an oil pickup amount of 0.2% to 2.0%.

In the relaxing process, the relaxation rate of the undrawn polyester yarn may be 14% or less or 1% to 14%, preferably 10% or less or 1% to 10%, and more preferably 7% or less or 1.1% to 7%. The lower limit of the relaxation rate thereof may be selected within the range in which the contraction of the polyester yarn can be sufficiently exhibited. For example, the lower limit thereof may be 1% or more. In this case, when the relaxation rate thereof is excessively small, for example, when the relaxation rate thereof is less than 1%, it is difficult to manufacture a high-strength and low Young's modulus polyester yarn because high fiber orientation is formed, like in the case of a high draw ratio condition. Further, when the relaxation rate thereof is more than 14%, it is difficult to secure workability because the undrawn polyester yarn severely trembles on a godet roller.

Meanwhile, in the drawing process, a thermal fixation process of heat-treating the undrawn polyester yarn at a temperature of 170 to 250°C may be additionally performed. Preferably, in order to easily the drawing process, the undrawn polyester yarn may be heat-treated at a temperature of 172 to 245°C, and preferably 175 to 220°C. Here, when the heat treatment temperature is lower than 170°C, thermal effects are insufficient, so the relaxation efficiency of the undrawn polyester yarn becomes low, and thus it is difficult to realize an appropriate contraction rate. Further, when the heat treatment temperature is more than 250°C, the strength of the polyester yarn is deteriorated by the thermal decomposition of the undrawn polyester yarn, and tar is formed on a godet roller, thus deteriorating workability. Particularly, when the thermal fixation process is performed at a lower temperature to optimize the relaxing efficiency, a fabric for an airbag made of this polyester yarn can exhibit excellent airtightness due to the optimized contraction characteristics.

In this case, the winding speed of the undrawn polyester yarn may be 2,000 to 4,000 m/min, and preferably 2,500 to 3,700 m/min.

Another embodiment of the present invention provides a polyester fabric for an airbag including the above-mentioned polyester yarn.

In the present invention, the term "fabric for an airbag" refers to "a fabric or nonwoven fabric" used to manufacture an airbag for automobiles, and is characterized in that it is manufactured using the polyester yarn manufactured by the above process.

Particularly, in the present invention, when a polyester yarn, which has high strength, high elongation and a low Young's modulus and which has tensile strength and tensile elongation that are optimized at room temperature and under severe conditions of high temperature and high humidity, is used, a polyester fabric for an airbag, which has high energy absorbing ability at the time of an airbag being expanded and which has excellent shape stability, air blocking effects, foldability, flexibility and storability, can be manufactured. Further, the polyester fabric has excellent physical properties at room temperature, and can maintain excellent mechanical properties and airtightness under severe conditions of high temperature and high humidity even after it is aged.

The polyester fabric for an airbag according to the present invention may have a warpwise strength-elongation index ($TI^{wa}$) of 0.18 to 0.38 measured after heat-treating the polyester fabric under conditions of a temperature of 85°C and a relative humidity (RH) of 65% for 4 hours and represented by Calculation Formula 5 below:

$$[\text{Calculation Formula 5}]$$

$$TI^{wa} = T^{wa}/(S^{wa} \times D)$$

wherein $T^{wa}$ is warpwise tensile strength (N) of the polyester fabric measured according to ISO 13934-1 (standard of the International Standardization Organization),
$S^{wa}$ is warpwise tensile elongation (%) of the polyester fabric measured according to ISO 13934-1 (standard of the International Standardization Organization), and
D is fineness (De) of a polyester yarn.

Further, the polyester fabric may have a weftwise strength-elongation index ($TI^{we}$) of 0.18 to 0.38 measured after heat-treating the polyester fabric under conditions of a temperature of 85°C and a relative humidity (RH) of 65% for 4 hours and represented by Calculation Formula 6 below:

$$[\text{Calculation Formula 6}]$$

$$TI^{we} = T^{we}/(S^{we} \times D)$$

wherein $T^{we}$ is weftwise tensile strength (N) of the polyester fabric measured according to ISO 13934-1 (standard of the International Standardization Organization),
$S^{we}$ is weftwise tensile elongation (%) of the polyester fabric measured according to ISO 13934-1 (standard of the International Standardization Organization), and
D is fineness (De) of a polyester yarn.

The polyester fabric may have a warpwise edge comb resistance index ($EI^{wa}$) of 0.15 to 0.38 measured after heat-treating the polyester fabric under conditions of a temperature of 85°C and a relative humidity (RH) of 65% for 4 hours and represented by Calculation Formula 7 below:

$$[\text{Calculation Formula 7}]$$

$$EI^{wa} = ER^{wa}/[(\text{warp density} + \text{weft density}) \times D^{1/2}]$$

wherein $ER^{wa}$ is warpwise edge comb resistance (N) of the polyester fabric measured according to ASTM D 6479 (standard of the American Society for Testing and Materials), and
D is fineness (De) of a polyester yarn.

Further, the polyester fabric may have a weftwise edge comb resistance index ($EI^{we}$) of 0.15 to 0.38 measured after heat-treating the polyester fabric under conditions of a temperature of 85°C and a relative humidity (RH) of 65% for 4 hours and represented by Calculation Formula 8 below:

$$[\text{Calculation Formula 8}]$$

$$EI^{we} = ER^{we}/[(\text{warp density} + \text{weft density}) \times D^{1/2}]$$

wherein $ER^{we}$ is weftwise edge comb resistance (N) of the polyester fabric measured according to ASTM D 6479 (standard of the American Society for Testing and Materials), and
D is fineness (De) of a polyester yarn.

Since the polyester fabric of the present invention is made of a polyester yarn having higher strength and lower Young's modulus than a conventional polyester yarn, the tensile strength, tensile elongation and edge comb resistance of the polyester fabric are optimized, and thus the polyester fabric can effectively absorb and endure the energy of high-temperature and high-pressure gas.

In particular, the polyester fabric may include a high-strength and low linear density polyester yarn, and this polyester yarn may have linear density of 400 to 650 denier, and preferably 420 to 630 denier.

The warpwise strength-elongation index ($TI^{wa}$) of the polyester fabric, measured after heat-treating the polyester fabric under conditions of a temperature of 85°C and a relative humidity (RH) of 65% for 4 hours and represented by Calculation Formula 5 above, may be 0.18 to 0.38, and preferably 0.185 to 0.360, which can be accomplished by optimizing the fineness (D) of the polyester yarn included in the polyester fabric and the warpwise tensile strength ($T^{wa}$) and warpwise tensile elongation ($S^{wa}$) of the polyester fabric. The polyester fabric for an airbag can secure improved toughness and energy absorbing performance compared to those of a conventional PET fabric, can solve the problem of high stiffness and can exhibit excellent foldability, flexibility and storability by the optimization of the fineness (D) of the polyester yarn and the warpwise tensile strength ($T^{wa}$) and warpwise tensile elongation ($S^{wa}$) of the polyester yarn.

Further, the mechanical properties, shape stability, storability and air blocking effects of the polyester fabric can be improved by optimizing the weftwise tensile strength ($T^{we}$) and weftwise tensile elongation ($S^{we}$) of the polyester fabric as well as by optimizing the warpwise tensile strength ($T^{wa}$) and warpwise tensile elongation ($S^{wa}$) of the polyester fabric. The fineness (D) of the polyester yarn and the weftwise tensile strength ($T^{we}$) and weftwise tensile elongation ($S^{we}$) of the polyester fabric may be optimized such that the weftwise strength-elongation index ($TI^{we}$) of the polyester fabric, measured after heat-treating the polyester fabric under conditions of a temperature of 85°C and a relative humidity (RH) of 65% for 4 hours and represented by Calculation Formula 6 above, may be 0.18 to 0.38, and preferably 0.185 to 0.360.

The warpwise edge comb resistance index ($EI^{wa}$) of the polyester fabric, measured after heat-treating the polyester fabric under conditions of a temperature of 85°C and a relative humidity (RH) of 65% for 4 hours and represented by Calculation Formula 7 above, may be 0.15 to 0.38, and preferably 0.155 to 0.360, which can be accomplished by optimizing the fineness (D) of the polyester yarn included in the polyester fabric and the warpwise weaving density, weftwise weaving density and warpwise edge comb resistance ($ER^{wa}$) of the polyester fabric. The polyester fabric for an airbag can secure improved toughness and energy absorbing performance compared to those of a conventional PET fabric, can solve the problem of high stiffness and can exhibit excellent foldability, flexibility and storability by the optimization of the fineness (D) of the polyester yarn and the warpwise edge comb resistance ($ER^{wa}$) of the polyester fabric.

Further, the mechanical properties, shape stability, storability and air blocking effects of the polyester fabric can be improved by optimizing the weftwise edge comb resistance ($ER^{we}$) of the polyester fabric as well as by optimizing the warpwise edge comb resistance ($ER^{wa}$) of the polyester fabric. The weftwise edge comb resistance ($ER^{we}$) of the polyester fabric, the warpwise weaving density and weftwise weaving density of the polyester fabric and the fineness (D) of the polyester yarn may be optimized such that the weftwise edge comb resistance index ($EI^{we}$) of the polyester fabric, measured after heat-treating the polyester fabric under conditions of a temperature of 85°C and a relative humidity (RH) of 65% for 4 hours and represented by Calculation Formula 6 above, may be 0.15 to 0.38, and preferably 0.155 to 0.360.

In the present invention, in order for an airbag to effectively absorb the impact energy instantaneously generated at the time of operating the airbag, the tensile strength, tensile elongation, edge comb resistance of a polyester fabric as well as the fineness of a polyester yarn constituting the polyester fabric must be adjusted in an optimum range, thus improving the mechanical properties and foldability of the polyester fabric. Further, in order for an airbag to quickly and safely absorb the instantaneous impact energy of the exhaust gas generated by the explosion of gunpowder in the airbag, to be effectively deployed and to have excellent foldability, it is required to optimize the tensile strength and tensile elongation of the polyester fabric. In this case, it required that the tensile strength, tensile elongation, edge comb resistance and the like of the polyester fabric satisfies the above-mentioned range of the strength-elongation index, edge comb resistance index and the like of the polyester fabric.

The polyester fabric of the present invention has high energy absorbing ability at the time of an airbag being expanded and has excellent shape stability, air blocking effects, foldability, flexibility and storability because it is made of a polyester fiber having high strength, high elongation and a low Young's modulus instead of a conventional polyester fiber having high strength, low elongation and a high Young's modulus. Further, the polyester fabric has excellent physical properties at room temperature, and can maintain excellent mechanical properties and airtightness under severe conditions of high temperature and high humidity even after it is aged.

More specifically, the tensile strength of the polyester fabric, indicated by $T^{wa}$ in Calculation Formula 5 above, that is, the warpwise tensile strength of the polyester fabric, may be 2,700 N/5cm or more or 2,700 to 4,600 N/5cm, and preferably 2,850 N/5cm or more or 2,850 to 4,450 N/5cm. Further, the tensile elongation of the polyester fabric, indicated by $S^{wa}$ in Calculation Formula 5 above, that is, the warpwise tensile elongation of the polyester fabric, may be 20% or more or 20 to 60%, and preferably 30% or more or 30 to 50%. As such, when the warpwise tensile strength ($T^{wa}$) of the polyester fabric is maintained at 2,700 N/5cm or more and the warpwise tensile elongation ($S^{wa}$) of the polyester fabric is maintained at 20% or more, the polyester fabric can secure high toughness and sufficient energy absorbing performance at the time of deploying an airbag. When the tensile strength and tensile elongation of the polyester fabric cannot be maintained at 2,700 N/5cm or more and 20% or more, respectively, the polyester fabric is torn at the time of deploying an airbag, so an occupant cannot be effectively protected, thereby damaging the occupant.

Further, it is preferred in terms of protecting an occupant by absorbing the high-temperature and high-pressure inflator pressure occurring at the time of deploying an airbag that the warpwise strength-elongation index ($TI^{wa}$) of the polyester fabric, as indicated in Calculation Formula 5 above, be 0.18 or more, and it is preferred in terms of the storability of an airbag cushion assembly that the warpwise strength-elongation index ($TI^{wa}$) thereof be 0.38 or less. When the warpwise strength-elongation index ($TI^{wa}$) of the polyester fabric does not satisfy the above range, the toughness of the polyester fabric is deteriorated, so the polyester fabric is easily torn at the time of deploying an airbag. Particularly, when the warpwise strength-elongation index ($TI^{wa}$) of the polyester fabric is less than 0.18, the strength of the polyester fabric itself become low, so the polyester fabric is easily torn at the time of deploying an airbag, and thus this polyester fabric may be difficult to use. Conversely, when the warpwise strength-elongation index ($TI^{wa}$) of the polyester fabric is more than 0.38, the toughness of the polyester fabric excessively increases, so the foldability of an airbag cushion deteriorates, and thus this polyester fabric may be difficult to be applied to an airbag.

The tensile strength of the polyester fabric, indicated by $T^{wE}$ in Calculation Formula 6 above, that is, the weftwise tensile strength of the polyester fabric may be 2,700 N/5cm or more or 2,700 to 4,600 N/5cm, and preferably 2,850 N/5cm or more or 2,850 to 4,450 N/5cm. Further, the tensile elongation of the polyester fabric, indicated by $S^{we}$ in Calculation Formula 6 above, that is, the weftwise tensile elongation of the polyester fabric, may be 20% or more or 20 to 60%, and preferably 30% or more or 30 to 50%. The weftwise tensile strength ($T^{we}$) and weftwise tensile elongation ($S^{we}$) may be 2,700 N/5cm or more and 20% or more in terms of allowing an airbag cushion to secure high toughness and excellent energy absorbing performance. Further, the weftwise strength-elongation index ($TI^{we}$) of the polyester fabric according to the weftwise tensile strength ($T^{we}$) and weftwise tensile elongation ($S^{we}$) thereof may be maintained in the range of 0.18 to 0.38, as indicated in Calculation Formula 6, in terms of allowing an airbag cushion to secure sufficient energy absorbing performance, excellent mechanical properties and excellent foldability.

The polyester fabric for an airbag according to the present invention may have a toughness of 3.5 kJ/m$^3$ or more or 3.5 kJ/m$^3$ to 6.0 kJ/m$^3$, and preferably 3.8 kJ/m$^3$ or more or 3.8 kJ/m$^3$ to 5.7 kJ/m$^3$, which is represented by Calculation Formula 9 below:

[Calculation Formula 9]

$$\text{Toughness (work of rupture)} = \int_0^{strain} F \cdot dl$$

wherein F indicates a load applied when the length of the polyester fabric increases by dl, and dl indicates the increased length of the polyester fabric.

The polyester fabric has high toughness (work of rupture) compared to that of a conventional polyester fabric, so it can effectively absorb and endure the energy of high-temperature and high-pressure gas. In this case, as represented by Calculation Formula 9 above, the term "toughness" is energy consumed until a fiber is cut by tension, and means the resistance of a fiber to a sudden impact. When the length of a fiber is increased from 1 to 1+dl by a load (F), the work done is F·dl, and thus the toughness required to cut the fiber is represented by Calculation Formula 9 above. That is, the toughness indicates the section area in the strong-elongation curve of a yarn and a fabric (refer to FIG. 1), and as the strength and elongation of a yarn used for a fabric increase, the toughness of the fabric becomes high. Particularly, when the toughness of a fabric for an airbag becomes low, the fabric's resistance for sufficiently absorbing the instantaneous impact of a high-temperature and high-pressure inflator occurring at the time of deploying an airbag becomes low, thus causing the fabric for an airbag to be easily torn. Therefore, when the toughness of the polyester fabric of the present invention is, for example, less than 3.5 kJ/m$^3$, it may be difficult to apply this polyester fabric for a fabric for an airbag.

Further, the polyester fabric requires high tear strength because it is rapidly expanded by high-temperature and high-pressure gas. The tear strength of the noncoated polyester fabric, indicating the rupture strength of a fabric for an airbag, may be 18 to 30 kgf, which was measured by the TONGUE method according to ASTM D 2261 (standard of the American Society for Testing and Materials). Further, the tear strength of the coated polyester fabric may be 30 to 60 kgf, which was measured by the TONGUE method according to ASTM D 2261 (standard of the American Society for Testing and Materials). Here, when the tear strength of a polyester fabric for an airbag is less than 18 kgf and 30 kgf, which are the lower limits of tears strengths of the noncoated polyester fabric and the coated polyester fabric, respectively, an airbag is ruptured when it is deployed, thus causing an occupant to be in danger. In contrast, when the tear strength of a polyester fabric for an airbag is more than 30 kgf and 60 kgf, which are the upper limits of tears strengths of the noncoated polyester fabric and the coated polyester fabric, respectively, the edge comb resistance of the polyester fabric becomes low, and the air blocking effect thereof rapidly becomes poor.

As described above, since the polyester fabric of the present invention is made of a polyester yarn having high strength, high elongation and a low Young's modulus, the polyester fabric can secure excellent edge comb resistance, and thus the energy absorbing performance, foldability and the like of this polyester fabric can be improved. Particularly, the edge comb resistance of the polyester fabric, indicated by $ER^{wa}$ in Calculation Formula 7 above, that is, the warpwise edge comb resistance of the polyester fabric, measured at room temperature (25°C), may be 300 N or more or 300 to 970 N, and preferably 320 N or more or 320 to 950 N. As such, when the warpwise edge comb resistance ($ER^{wa}$) of the polyester fabric is maintained at 300 N or more, the polyester fabric can secure high toughness and sufficient energy absorbing performance at the time of deploying an airbag. When the warpwise edge comb resistance ($ER^{wa}$) of the polyester fabric is less than 300 N, the strength of the polyester fabric located at the sewn site of an airbag cushion is rapidly deteriorated. Consequently, pinholes are formed in the polyester fabric and the seams of the polyester fabric are tensioned, thus causing the polyester fabric to be torn.

Further, it is preferred in terms of protecting an occupant by absorbing the high-temperature and high-pressure inflator pressure occurring at the time of deploying an airbag that the warpwise edge comb resistance index ($EI^{wa}$) of the polyester fabric, as indicated in Calculation Formula 7 above, be 0.15 or more, and it is preferred in terms of the storability of an airbag cushion assembly that the warpwise edge comb resistance index ($EI^{wa}$) thereof be 0.38 or less. When the warpwise edge comb resistance index ($EI^{wa}$) of the polyester fabric does not satisfy the above range, it is difficult to apply the polyester fabric to an airbag cushion. Particularly, when the warpwise edge comb resistance index ($EI^{wa}$) of the polyester fabric is less than 0.15, the edge comb resistance of the polyester fabric located at the sewn seam in an airbag cushion becomes excessively low at the time of deploying an airbag, so a pinhole phenomenon and a seam tensioning phenomenon occur, and thus this polyester fabric cannot be applied to an airbag cushion. Conversely, when the warpwise edge comb resistance index ($EI^{wa}$) of the polyester fabric is more than 0.38, the edge comb resistance of the polyester fabric located at the sewn seam in an airbag cushion is sufficient, and thus the problem at the time of deploying an airbag does not occur, but the polyester fabric itself becomes stiff, and thus the foldability and packaging property of an airbag cushion becomes poor, so this polyester fabric may be difficult to be applied to an airbag cushion.

The weftwise edge comb resistance of the polyester fabric, indicated by $ER^{we}$ in Calculation Formula 8 above and measured at room temperature (25°C), may be 300 N or more or 300 to 970 N, and preferably 320 N or more or 320 to 950 N. The weftwise edge comb resistance ($ER^{we}$) of the polyester fabric may be 300 N or more in terms of allowing an airbag cushion to secure high toughness and excellent energy absorbing performance. Further, as described above, the weftwise edge comb resistance index ($EI^{we}$) of the polyester fabric according to the weftwise edge comb resistance ($ER^{we}$) thereof may be maintained in the range of 0.15 to 0.38, as indicated in Calculation Formula 8, in terms of allowing an airbag cushion to secure sufficient energy absorbing performance, excellent mechanical properties and excellent foldability.

In this case, each of the warp density and weft density of the polyester fabric, that is, each of the warpwise weaving density and weftwise weaving density of the polyester fabric of the polyester fabric, may be 38 to 60, and preferably 41 to 57. Each of the warp density and weft density of the polyester fabric may be 38 in terms of allowing a polyester fabric for an airbag to secure toughness and edge comb resistance, and may be 60 or less in terms of improving the foldability of the polyester fabric and decreasing the tear strength thereof.

Meanwhile, it is very important that the elongation of the polyester fabric to the tension caused by high-pressure air is minimized in order to improve the airtightness of the polyester fabric, and that the energy absorbing performance of the polyester fabric from high-temperature and high-pressure exhaust gas is maximized in order for an airbag to secure sufficient mechanical properties at the time of operating the airbag. Therefore, the cover factor (CF) of polyester fabric, represented by Calculation Formula 10 below, is optimized in the range of 1,800 to 2,460, and preferably 1,880 to 2,360, thus improving the airtightness and energy absorbing performance of the polyester fabric at the time of deploying an airbag.

[Calculation Formula 10]

Cover factor (CF)

$$= \text{warp density(strand/inch)} \times \sqrt{(\text{warp denier})} + \text{weft density(strand/inch)} \times \sqrt{(\text{weft denier})}$$

Here, when the cover factor (CF) of the polyester fabric is less than 1,800, there is a problem in that air is easily discharged to the outside during air expansion, and when the cover factor (CF) thereof is more than 2,460, there is a problem in that the storability and foldability of an airbag cushion may be remarkably deteriorated when an airbag is mounted in an automobile.

Each of the warpwise contraction rate and weftwise contraction rate of the polyester fabric of the present invention, measured by the method according to the ASTM D 1776 (standard of the American Society for Testing and Materials), may be 1.0% or less, and preferably 0.8% or less, and, after the polyester fabric is aged, each of the warpwise contraction rate and weftwise contraction rate thereof may be 1.0% or less, and preferably 0.8% or less. Here, it is most preferred in terms of shape stability that each of the warpwise contraction rate and weftwise contraction rate of the polyester fabric does not exceed 1.0%.

As described above, when the polyester fabric is made of a polyester yarn having high strength and a low Young's modulus, the toughness and tear strength of the polyester fabric can be maintained, and simultaneously the stiffness thereof can be remarkably decreased. The stiffness of the polyester fabric for an airbag, measured by the method according to the ASTM D 1776 (standard of the American Society for Testing and Materials), may be 1.5 kgf or less or 0.3 to 1.5 kgf, preferably 1.2 kgf or less or 0.3 to 1.2 kgf, and more preferably 0.8 kgf or less or 0.3 to 0.8 kgf. As such, as the stiffness of the polyester fabric of the present invention is remarkably decreased compared to that of a conventional polyester fabric, the polyester fabric for an airbag according to the present invention can exhibit excellent foldability, flexibility and storability when an airbag is mounted in an automobile.

It is preferred that the stiffness of the polyester fabric of the present invention be maintained in the above range in order to use this polyester fabric for an airbag. When the stiffness thereof is excessively low, an airbag cannot sufficiently protect and support an occupant at the time of the airbag being expanded and deployed, and the shape stability of the airbag is deteriorated even at the time of the airbag being mounted in an automobile to deteriorate the storability thereof. Further, when the stiffness thereof is excessively high, the polyester fabric becomes excessively stiff, so an airbag made thereof cannot be easily folded, thereby deteriorating the storability of the airbag. Therefore, in order to prevent the storability of an airbag from being deteriorated and to prevent the polyester fabric from being discolored, it is preferred that the stiffness thereof be 1.5 kgf or less. Particularly, it is preferred that the stiffness thereof be 0.8 kgf or less when the fineness of a polyester yarn is 460 denier or less, and be 1.5 kgf or less even when the fineness of a polyester yarn is 550 denier or more.

The static air permeability of the polyester fabric (noncoated fabric) according to the ASTM D 737 method (standard of the American Society for Testing and Materials) may be 10.0 cfm or less or 0.3 to 10.0 cfm, preferably 8.0 cfm or less or 0.3 to 8.0 cfm, and more preferably 5.0 cfm or less or 0.3 to 5.0 cfm when $\Delta P$ is 125 Pa, and may be 14 cfm or less or 4 to 14 cfm, and preferably 12 cfm or less or 4 to 12 cfm when $\Delta P$ is 500 Pa. Further, the dynamic air permeability of the polyester fabric (noncoated fabric) according to the ASTM D 6476 method (standard of the American Society for Testing and Materials) may be 1,700 mm/s or less, preferably 1,600 mm/s or less or 200 to 1,600 mm/s, and more preferably 1,400 mm/s or less or 400 to 1,400 mm/s. In this case, the term "static air permeability" means the amount of air permeating into a polyester fabric for an airbag when predetermined pressure is applied to the polyester fabric. The static air permeability of the polyester fabric may become low as the single yarn fineness (Denier per Filament) of a polyester yarn is small and the density of the polyester fabric is low. Further, the term "dynamic air permeability" means the amount of air permeating into a polyester fabric for an airbag when average instant differential pressure of 30~70 kPa is applied to the polyester fabric. The dynamic air permeability of the polyester fabric may also become low as the single yarn fineness (Denier per Filament) of a polyester yarn is small and the density of the polyester fabric is low.

In particular, the air permeability of the polyester fabric can be remarkably lowered by applying a rubber coating layer to the polyester fabric, and in this case, the air permeability thereof is approximately 0 cfm. As such, in the case where the polyester fabric is coated with rubber, the static air permeability of the polyester fabric coated with rubber according to the ASTM D 737 method (standard of the American Society for Testing and Materials) may be 0.1 cfm or less or 0 to 0.1 cfm, and preferably 0.05 cfm or less or 0 to 0.05 cfm when $\Delta P$ is 125 Pa, and may be 0.3 cfm or less or 0 to 0.3 cfm, and preferably 0.1 cfm or less or 0 to 0.1 cfm when $\Delta P$ is 500 Pa.

Here, it may be not preferred in terms of maintaining the airtightness of a polyester fabric for an airbag that the static air permeability of the noncoated or coated polyester fabric of the present invention exceeds the upper limit of the above static air permeability range, or the dynamic air permeability thereof exceeds the upper limit of the above dynamic air permeability range.

The polyester fabric may further include a rubber coating layer applied or laminated on the surface thereof. The rubber may be at least one selected from the group consisting of powdered silicone, liquid silicone, polyurethane, chloroprene, neoprene, and emulsified silicone, and the kinds of the rubber are not limited thereto. However, it is preferred in terms of environment-friendly and mechanical characteristics that the polyester fabric be coated with silicone.

The rubber coating layer is applied onto the polyester fabric in an amount of 20 to 200 g/m$^2$, and preferably 20 to 100 g/m$^2$ per unit area of the polyester fabric. Particularly, in the case of a polyester fabric for a one-piece-woven (OPW) type side curtain airbag, the amount of rubber applied thereto may be 30 g/m$^2$ to 95 g/m$^2$, and in the case of a flat-woven polyester fabric for an airbag, the amount of rubber applied thereto may be 20 g/m$^2$ to 50 g/m$^2$.

Further, the scrub resistance number of the polyester fabric of the present invention according to the ISO 5981 (standard of the International Standardization Organization) may be 600 times or more or 600 to 2,500 times, and preferably 650 times or more or 650 to 2500 times. The polyester fabric needs sufficient scrub resistance in order to secure excellent storability and foldability at the time of applying this polyester fabric to an airbag cushion and to endure the high-temperature and high-pressure inflator gas and strong friction occurring when the airbag cushion is deployed. Particularly, in the case where a coating layer is easily stripped from the surface of an airbag cushion with the passage of time while the airbag cushion is stored in an automobile for a long time, a polyester fabric for an airbag is severely damaged, thus not assuring the safety of an occupant of an automobile.

Meanwhile, in the present invention, in order for a polyester fabric for an airbag to have excellent performance, it is preferred that the polyester fabric be aged in various methods to improve physical properties thereof. In this case, the aging of the polyester fabric may be performed by at least one selected from the group consisting of high-temperature aging, cycle aging and high-humidity aging. Preferably, the strength and physical properties of the polyester fabric must be maintained even after the three kinds of aging processes are performed.

Here, the high-temperature aging of the polyester fabric may be performed by heat-treating the polyester fabric at a high temperature, and may preferably be performed by heat-treating the polyester fabric at a temperature of 110 to 130°C for 300 hours or more or 300 to 500 hours. The cycle aging of the polyester fabric may be performed by repeatedly conducting the high-temperature aging, high-humidity aging and low-temperature aging thereof, and may preferably be performed by heat-treating the polyester fabric at a temperature of 30 to 45°C and a relative humidity (RH) of 93 to 97% for 12 to 48 hours, heat-treating it at a temperature of 70 to 120°C for 12 to 48 hours and then heat-treating it at a temperature of -10 to -48°C for 12 to 48 hours, these heat treatment processes being repeatedly carried out 2 to 5 times. The high-humidity aging of the polyester fabric may be performed by heat-treating the polyester fabric under conditions of high temperature and high humidity, and may preferably be performed by heat-treating the polyester fabric at a temperature of 60 to 90°C and a relative humidity (RH) of 93 to 97% for 300 hours or more or 300 to 500 hours.

Particularly, the strength holding ratio of the polyester fabric of the present invention, which is a ratio (%) of strength measured after performing the aging under the above conditions to strength measured at room temperature, may be 80% or more, preferably 85% or more, and more preferably 90% or more. As such, since the strength holding ratio of the polyester fabric is maintained in the above range even after the polyester fabric is aged under severe conditions of a high temperature and high humidity for a long period of time, the polyester fabric can exhibit excellent performance as a fabric for an airbag.

Meanwhile, still another embodiment of the present invention provides a method of manufacturing a polyester fabric for an airbag using the above-mentioned polyester yarn. The method of manufacturing a polyester fabric for an airbag includes the steps of: weaving a polyester yarn having fineness of 400 to 650 denier to form a grey cloth for an airbag; scouring the grey cloth for an airbag; and heat setting the scoured grey cloth.

In the present invention, the polyester yarn may be formed into a polyester fabric for an airbag by weaving, scouring and heat-setting processes. In this case, the weaving shape of the polyester fabric is not particularly limited. Preferably, the polyester fabric may be a flat-woven type fabric or a one-piece-woven (OPW) type fabric.

Particularly, the polyester fabric for an airbag according to the present invention may be manufactured by performing beaming, weaving, scouring and heat-setting processes using a polyester yarn as a warp and a weft. The polyester fabric may be manufactured using a general weaving machine, and the kind of the weaving machine is not limited. Preferably, a flat-woven type polyester fabric may be manufactured using a Rapier loom, an air jet loom or a water jet loom, and a one-piece-woven (OPW) type polyester fabric may be manufactured using a Jacquard loom.

However, in the present invention, a polyester yarn having high strength, high elongation and low shrinkage compared to a conventional polyester yarn is used, so the heat treatment of the polyester yarn may be performed at a high temperature compared to that of a conventional polyester yarn. That is, in the present invention, a polyester yarn is woven to prepare a grey cloth, the grey cloth is scoured, the scoured grey cloth is tentered (heat-setting process), and then the tentered grey cloth is coated with rubber, dried and cured at a vulcanization temperature of 140 to 210°C, preferably 150 to 205°C, and more preferably 160 to 190°C to obtain a polyester fabric. In this case, the vulcanization temperature must be 140°C or more in terms of maintaining the tear strength and mechanical properties of a polyester fabric, and must be 210°C or less in terms of the stiffness of a polyester fabric. In particular, the heat treatment process may be performed by multiple steps. For example, primary heat treatment is performed at 150 to 170°C, secondary heat treatment is performed at 170 to 190°C, and then tertiary heat treatment is performed at 190 to 210°C.

As such, when the polyester fabric of the present invention is manufactured by high-temperature heat treatment, the shape stability, air blocking effects, stiffness and tear strength thereof can be more improved because of the optimized contraction rate of the polyester yarn itself.

Further, the curing time may be 30 to 120 seconds, preferably 35 to 100 seconds, and more preferably 40 to 90 seconds. Here, when the curing time is less than 30 seconds, there is a problem in that a coating layer is not effectively cured because of rubber, so the mechanical properties of the polyester fabric are deteriorated, and thus the coating layer is stripped from the polyester fabric. Further, when the curing time is more than 120 seconds, there is a problem in that the stiffness and thickness of the finally produced polyester fabric increase, thus deteriorating the foldability thereof.

As described above, one side or both sides of the polyester fabric for an airbag according to the present invention may be coated with rubber, and the rubber coating layer may be formed by a knife coating method, a doctor blade method or a spray coating method. However, the coating method is not limited thereto.

The polyester fabric coated with rubber in this way may be formed into an airbag cushion by cutting and sewing processes. The shape of the airbag cushion is not particularly limited.

Meanwhile, still another embodiment of the present invention provides an automobile airbag including the above-mentioned polyester fabric. Further, another embodiment of the present invention provides an airbag system including the airbag. This airbag system may be equipped with a general apparatus that is well known to those skilled in the art.

The airbags may be largely classified into frontal airbags and side curtain airbags. The frontal airbags includes an airbag for a driver seat, an airbag for a passenger seat, an airbag for side protection, an airbag for knee protection, an airbag for ankle protection, an airbag for pedestrian protection, and the like. The side curtain airbags are used to protect an occupant at the time of side collision and overturn of an automobile. Therefore, the airbag of the present invention may be a frontal airbag or a side curtain airbag.

In the present invention, matters other than the above-mentioned contents are not particularly limited because they can be added or omitted according to circumstances.

**Mode for Invention**

Hereinafter, the present invention will be described in more detail with reference the following Examples. However, these Examples are set forth only to illustrate the present invention, and the scope of the present invention is not limited thereto.

Examples 1 to 5

Each polyester yarn was manufactured by melt-spinning a PET polymer having a predetermined intrinsic viscosity and a predetermined amount of CEG to prepare an undrawn polyester yarn, drawing the undrawn polyester yarn at a predetermined draw ratio and then heat-treating the drawn polyester yarn. In this case, the intrinsic viscosity and CEG content of the PET polymer, the spinning speed and spinning tension in the melt-spinning process, spinning temperature, draw ratio, and heat treatment temperature are given in Table 1 below, and other conditions were based on general conditions for manufacturing a polyester yarn.

[Table 1]

|  | Ex.1 | Ex.2 | Ex.3 | Ex.4 | Ex.5 |
|---|---|---|---|---|---|
| PET content (mol %) | 100 | 100 | 100 | 100 | 100 |
| Intrinsic viscosity of PET chip(dl/g) | 1.25 | 1.33 | 1.40 | 1.50 | 1.60 |
| CEG of PET chip (meq/kg) | 30 | 27 | 24 | 23 | 22 |
| Spinning temperature (°C) | 293 | 295 | 295 | 295 | 295 |
| Total draw ratio | 5.99 | 6.03 | 6.07 | 6.11 | 6.15 |
| Heat treatment temperature (°C) | 235 | 239 | 243 | 240 | 244 |
| Relaxation ratio (%) | 5.6 | 5.7 | 5.8 | 6.1 | 6.3 |

The physical properties of the polyester yarns manufactured in Examples 1 to 5 were measured at room temperature (25 °C and 65±5% RH) without performing heat treatment using the following method, and the results thereof are given in Table 2 below.

1) Tensile strength and tensile elongation

The tensile strength and breaking elongation of each of the polyester yarns were measured using a universal material testing machine (Instron) according to the ASTM D 2256 (standard of the American Society for Testing and Materials) under conditions of a gauge length of 250 mm, a tension rate of 300 mm/min and an initial load of 0.05 g/d. The tensile strength (T°, g/d) and tensile elongation (S°, %) thereof were measured when the polyester yarn was broken by twisting the polyester yarn 60 ~ 120 times using a rubber grip.

2) Dry contraction ratio

The dry contraction rate of each of the polyester yarns was measured at a temperature of 180°C and a tension of 30 g for 2 minutes using a Testrite MK-V (manufactured by Testrite Corporation in Great Britain).

3) Young's modulus

The Young's modulus and strength-elongation index of each of the polyester yarns were measured according to the ASTM D 2256 (standard of the American Society for Testing and Materials). The Young's moduli thereof, when the elongation thereof is 1% and 2%, that is, at the spots at which the polyester yarn is extended by 1% and 2%, are given in Table 2 below.

4) Toughness

The toughness of each of the polyester yarns was calculated by Calculation Formula 4 below:

[Calculation Formula 4]

$$\text{Toughness (work of rupture)} = \int_0^{strain} F \cdot dl$$

wherein F indicates a load applied when a length of the polyester yarn increases by dl, and dl indicates the increased length of the polyester yarn.

5) Degree of Crystallization

The density (p) of each of the polyester yarns was measured at 25°C by a density gradient tube method using n-haptane and carbon tetrachloride, and the Degree of Crystallization thereof was calculated by Calculation Formula 11 below:

[Calculation Formula 11]

$$X_c(crystallinity) = \frac{\rho_c(\rho - \rho_a)}{\rho(\rho_c - \rho_a)}$$

wherein $\rho$ is density of polyester yarn, $\rho_c$ is density of crystal (in the case of PET, 1.457 g/cm$^3$), and $\rho_a$ is density of a noncrystal (in the case of PET, 1.336 g/cm$^3$).

6) Intrinsic viscosity

An emulsion was extracted from a sample using carbon tetrachloride, the sample was melted by OCP (ortho-chloro phenol) at 160±2°C, and then the viscosity of the sample in a viscosity tube was measured at 25°C using an automatic viscometer (Skyvis-4000). The intrinsic viscosity of each of the polyester yarns was calculated by Calculation Formula 12 below:

[Calculation Formula 12]

Intrinsic viscosity (IV) = {(0.0242 × Rel)+0.2634} × F

Rel = (seconds of solution × specific gravity of solution

× viscosity coefficient) / (OCP viscosity)

F= (IV of the standard chip) / (average of three IV measured from the standard chip with standard action)

7) CEG content

The content of the CEG (carboxyl end group) of each of the polyester yarns was measured according to ASTM D 664 and D 4094, wherein 0.2 g of a sample was put into a 50 mL triangle flask, 20 mL of benzyl alcohol was added to the sample, the temperature was increased to 180°C using a hot plate and then left for 5 minutes at the same temperature to completely dissolve the sample to form a solution, the solution was cooled to 135°C, 5 ~ 6 drops of phenolphthalein were applied to the solution, and then the solution was titrated with 0.02 N KOH to change the colorless solution into the pink solution. At this titration point, the content of CEG (-COOH, million equiv./sample kg) was calculated by Calculation Formula 13 below:

[Calculation Formula 13]

CEG = (A−B)×20×1/W

wherein A is the amount (mL) of KOH consumed in the titration of a sample, B is the amount (mL) of KOH consumed in a blank sample, and W is the weight (g) of a sample.

8) Single yarn Linear Density and DPF

The single yarn linear density of each of the polyester yarns was measured by cutting a polyester yarn to a length of 9000 m using a reel, weighing the cut polyester yarn to obtain total linear density (denier) and DPF (Denier per Filament) was measured by dividing the denier by the number of filaments.

[Table 2]

|  | Ex. 1 | Ex. 2 | Ex. 3 | Ex. 4 | Ex. 5 |
|---|---|---|---|---|---|
| Degree of Crystallization (%) | 43.2 | 43.9 | 45.2 | 45.6 | 46.3 |
| Intrinsic viscosity of polyester yarn (dl/g) | 0.92 | 0.96 | 0.98 | 1.01 | 1.04 |
| CEG of polyester yarn (meq/kg) | 33 | 29 | 27 | 26 | 26 |
| Young's modulus of polyester yarn (at elongation of 1%, g/de) | 99 | 96 | 97 | 94 | 98 |
| Young's modulus of polyester yarn (at elongation of 2%, g/de) | 78 | 76 | 77 | 76 | 77 |
| Tensile strength at room temperature (T°, g/d) | 9.1 | 9.15 | 9.20 | 9.3 | 9.33 |
| Tensile elongation at room temperature (S°, %) | 16.5 | 17 | 18.5 | 17.2 | 17.6 |
| Strength-elongation index at room temperature ($T^0/S^0$, $X^0$) | 0.552 | 0.538 | 0.497 | 0.541 | 0.530 |
| Dry contraction ratio of polyester yarn (%) | 5.2 | 5.3 | 3.8 | 4.5 | 5.3 |
| Toughness of polyester yarn ($J/m^3$) | 96.5 | 97 | 99 | 103 | 106 |
| DPF of Polyester Single yarn | 3.82 | 3.23 | 2.92 | 4.61 | 4.17 |
| Linear density of polyester yarn (de) | 420 | 420 | 420 | 600 | 600 |

(continued)

|  | Ex. 1 | Ex. 2 | Ex. 3 | Ex. 4 | Ex. 5 |
|---|---|---|---|---|---|
| Number of filaments of polyester yarn | 110 | 130 | 144 | 130 | 144 |

Further, the tensile strengths ($T^1$, $T^2$, $T^3$) and tensile elongations ($S^1$, $S^2$, $S^3$) of the polyester yarns manufactured in Examples 1 to 5 were measured in the same manner as above after heat-treating the polyester yarns under conditions of 85°C and 95±5% RH for 168, 360 and 504 hours, respectively, and the results thereof are given in Table 3 below.

[Table 3]

|  | Ex. 1 | Ex. 2 | Ex. 3 | Ex. 4 | Ex. 5 |
|---|---|---|---|---|---|
| Tensile strength after heat treatment under conditions of 85°C, 95±5% RH and 168 hours ($T^1$, g/d) | 8.76 | 8.81 | 8.86 | 8.96 | 8.98 |
| Tensile elongation after heat treatment under conditions of 85°C, 95±5% RH and 168 hours ($S^1$, %) | 17.8 | 18.7 | 20.2 | 18.6 | 19.5 |
| Primary strength-elongation index at high humidity ($T^1/S^1$, $X^1$) | 0.492 | 0.471 | 0.439 | 0.482 | 0.460 |
| Tensile strength after heat treatment under conditions of 85°C, 95±5% RH and 360 hours ($T^2$, g/d) | 8.57 | 8.62 | 8.67 | 8.76 | 8.79 |
| Tensile elongation after heat treatment under conditions of 85°C, 95±5% RH and 360 hours ($S^2$, %) | 18.8 | 19.9 | 21.3 | 21.0 | 22 |
| Secondary strength-elongation index at high humidity ($T^2/S^2$, $X^2$) | 0.456 | 0.433 | 0.407 | 0.417 | 0.399 |
| Tensile strength after heat treatment under conditions of 85°C, 95±5% RH and 504 hours ($T^3$, g/d) | 8.39 | 8.44 | 8.48 | 8.57 | 8.6 |
| Tensile elongation after heat treatment under conditions of 85°C, 95±5% RH and 504 hours ($S^3$, %) | 19.6 | 20.6 | 21.6 | 22.0 | 23.4 |
| Tertiary strength-elongation index at high humidity ($T^3/S^3$, $X^3$) | 0.427 | 0.410 | 0.392 | 0.389 | 0.367 |
| Ratio of primary strength-elongation index at high humidity to strength-elongation index at room temperature ($X^1/X^0$) | 0.892 | 0.875 | 0.883 | 0.892 | 0.868 |
| Ratio of secondary strength-elongation index at high humidity to strength-elongation index at room temperature ($X^2/X^0$) | 0.826 | 0.805 | 0.819 | 0.772 | 0.754 |
| Ratio of tertiary strength-elongation index at high humidity to strength-elongation index at room temperature ($X^3/X^0$) | 0.775 | 0.762 | 0.788 | 0.720 | 0.693 |

Comparative Examples 1 to 5

Polyester yarns of Comparative Examples 1 to 5 were manufactured in the same manner as in Examples 1 to 5, except for the conditions given in Table 4 below.

[Table 4]

|  | Co. Ex. 1 | Co. Ex. 2 | Co. Ex. 3 | Co. Ex. 4 | Co. Ex. 5 |
|---|---|---|---|---|---|
| PET content (mol%) | 100 | 100 | 100 | 100 | 100 |
| Intrinsic viscosity of PET chip(dl/g) | 0.80 | 0.83 | 0.88 | 0.91 | 0.92 |
| CEG of PET chip (meq/kg) | 52 | 49 | 45 | 45 | 43 |
| Spinning temperature (°C) | 301 | 302 | 305 | 302 | 305 |
| Total draw ratio | 4.95 | 5.03 | 5.10 | 5.03 | 5.10 |
| Heat treatment temperature (°C) | 220 | 223 | 227 | 223 | 227 |
| Relaxation ratio (%) | 4.7 | 4.75 | 4.8 | 4.75 | 4.8 |

**EP 2 617 881 A2**

The physical properties of the polyester yarns manufactured in Comparative Examples 1 to 5 were measured in the same manner as in Examples 1 to 5 at room temperature (25°C and 65±5% RH) without performing heat treatment, and the results thereof are given in Table 5 below.

[Table 5]

| | Co. Ex. 1 | Co. Ex. 2 | Co. Ex. 3 | Co. Ex. 4 | Co. Ex. 5 |
|---|---|---|---|---|---|
| Degree of Crystallization (%) | 41.7 | 41.9 | 41.9 | 41.9 | 41.9 |
| Intrinsic viscosity of polyester yarn (dl/g) | 0.59 | 0.60 | 0.61 | 0.61 | 0.62 |
| CEG of polyester yarn (meq/kg) | 59 | 55 | 55 | 53 | 51 |
| Young's modulus of polyester yarn (at elongation of 1%, g/de) | 115 | 119 | 125 | 119 | 125 |
| Young's modulus of polyester yarn (at elongation of 2%, g/de) | 90 | 93 | 93 | 92 | 92 |
| Tensile strength at room temperature (T°, g/d) | 6.9 | 7.2 | 7.3 | 7.2 | 7.7 |
| Tensile elongation at room temperature (S°, %) | 10 | 11 | 13.0 | 13.8 | 14.2 |
| Strength-elongation index at room temperature ($T^0/S^0$, $X^0$) | 0.690 | 0.655 | 0.562 | 0.522 | 0.542 |
| Dry contraction ratio of polyester yarn (%) | 15.5 | 13.6 | 11.4 | 12.0 | 11.8 |
| Toughness of polyester yarn ($J/m^3$) | 59 | 63 | 67 | 63 | 67 |
| DPF of Polyester single yarn | 7.35 | 6.94 | 6.94 | 10.0 | 9.14 |
| Linear density of polyester yarn (de) | 500 | 500 | 500 | 680 | 680 |
| Number of filaments of polyester yarn | 68 | 72 | 72 | 68 | 72 |

Further, the tensile strengths ($T^1$, $T^2$, $T^3$) and tensile elongations ($S^1$, $S^2$, $S^3$) of the polyester yarns manufactured in Comparative Examples 1 to 5 were measured in the same manner as above after heat-treating the polyester yarns under conditions of 85 °C (Celsius) and 95±5% RH for 168, 360 and 504 hours, respectively, and the results thereof are given in Table 6 below.

[Table 6]

| | Co. Ex. 1 | Co. Ex. 2 | Co. Ex. 3 | Co. Ex. 4 | Co. Ex. 5 |
|---|---|---|---|---|---|
| Tensile strength after heat treatment under conditions of 85°C, 95±5% RH and 168 hours ($T^1$, g/d) | 5.80 | 6.12 | 5.91 | 6.12 | 6.7 |
| Tensile elongation after heat treatment under conditions of 85°C, 95±5% RH and 168 hours ($S^1$, %) | 8.5 | 9.8 | 10.8 | 12.2 | 13.0 |
| Primary strength-elongation index at high humidity ($T^1/S^1$, $X^1$) | 0.682 | 0.624 | 0.548 | 0.502 | 0.515 |
| Tensile strength after heat treatment under conditions of 85°C, 95±5% RH and 360 hours ($T^2$, g/d) | 5.11 | 5.69 | 5.18 | 5.47 | 5.85 |
| Tensile elongation after heat treatment under conditions of 85°C, 95±5% RH and 360 hours ($S^2$, %) | 7.4 | 9.1 | 9.4 | 11.0 | 11.2 |
| Secondary strength-elongation index at high humidity ($T^2/S^2$, $X^2$) | 0.690 | 0.625 | 0.551 | 0.497 | 0.523 |
| Tensile strength after heat treatment under conditions of 85°C, 95±5% RH and 504 hours ($T^3$, g/d) | 4.69 | 5.33 | 4.82 | 5.04 | 5.78 |

23

(continued)

| | Co. Ex. 1 | Co. Ex. 2 | Co. Ex. 3 | Co. Ex. 4 | Co. Ex. 5 |
|---|---|---|---|---|---|
| Tensile elongation after heat treatment under conditions of 85°C, 95±5% RH and 504 hours ($S^3$, %) | 6.4 | 8.4 | 8.8 | 9.7 | 10.6 |
| Tertiary strength-elongation index at high humidity ($T^3/S^3$, $X^3$) | 0.733 | 0.634 | 0.548 | 0.520 | 0.545 |
| Ratio of primary strength-elongation index at high humidity to strength-elongation index at room temperature ($X^1/x^0$) | 0.988 | 0.954 | 0.975 | 0.961 | 0.950 |
| Ratio of secondary strength-elongation index at high humidity to strength-elongation index at room temperature ($X^2/X^0$) | 1.000 | 0.955 | 0.982 | 0.953 | 0.964 |
| Ratio of tertiary strength-elongation index at high humidity to strength-elongation index at room temperature ($X^3/X^0$) | 1.063 | 0.969 | 0.975 | 0.996 | 1.005 |

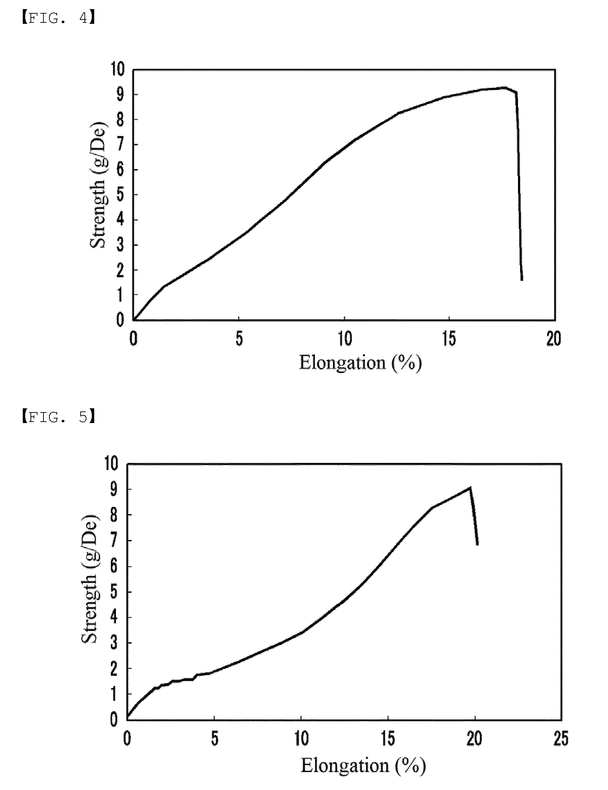

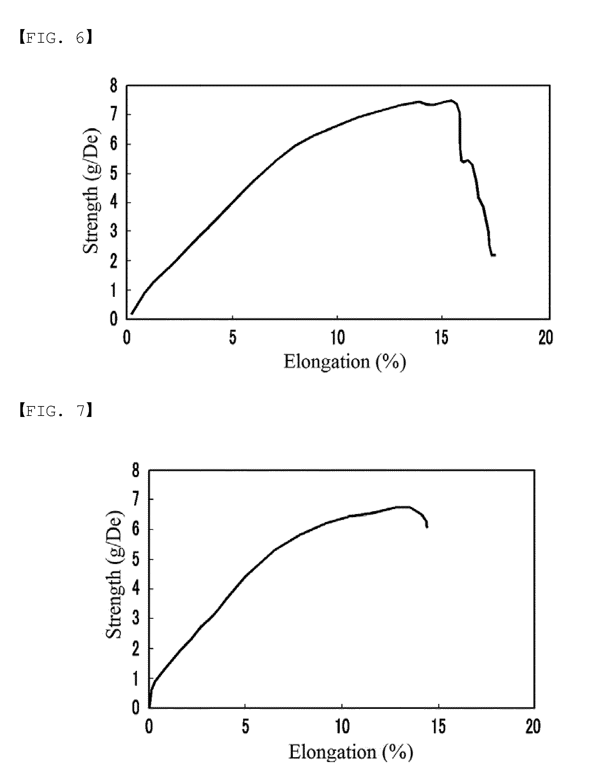

Further, the strength-elongation curve of the polyester yarn of Example 5, measured at room temperature, is shown in FIG. 4, and the strength-elongation curve of the polyester yarn of Example 5, measured after heat-treating the polyester yarn under conditions of 85°C and 95±5% RH for 168 hours, is shown in FIG. 5. The strength-elongation curve of the polyester yarn of Comparative Example 5, measured at room temperature, is shown in FIG. 6, and the strength-elongation curve of the polyester yarn of Comparative Example 5, measured after heat-treating the polyester yarn under conditions of 85°C and 95±5% RH for 168 hours, is shown in FIG. 7.

As shown in FIGS. 4 and 5, it can be ascertained that the tensile strength of the polyester yarn of Example 5 heat-treated under conditions of 85°C and 95±5% RH for 168 hours is 8.76 g/d, which is somewhat low compared to that of the polyester yarn left at room temperature, but is still excellent. Further, it can be ascertained that the toughness of the polyester yarn of Example 5 heat-treated under conditions of 85°C and 95±5% RH for 168 hours is not greatly lowered compared to that of the polyester yarn left at room temperature because the elongation of the polyester yarn is remarkably improved due to the rearrangement of molecular orientations of a PET polymer. Therefore, it can be inferred that the toughness of the polyester yarn of Example 5 is maintained even after heat treatment, so this polyester yarn can exhibit sufficient edge comb resistance together with excellent toughness when it is applied to a polyester fabric for an airbag.

Conversely, as shown in FIGS. 6 and 7, it can be ascertained that both the tensile strength and tensile elongation of the polyester yarn of Comparative Example 5 heat-treated under conditions of 85°C and 95±5% RH for 168 hours are lowered compared to those of the polyester yarn left at room temperature. Therefore, it can be ascertained that the toughness of the polyester yarn of Comparative Example 5 is rapidly lowered after heat treatment, so when it is applied to a polyester fabric for an airbag, the ability of the polyester fabric to absorb high-temperature and high-pressure inflator gas is deteriorated, and the foldability of the polyester fabric is also deteriorated, and thus this polyester yarn is not suitable to be used for the polyester fabric for an airbag.

Preparation Examples 1 to 5

Each of the polyester yarns manufactured in Examples 1 to 5 was woven by a rapier loom to prepare a grey polyester cloth for an airbag, the grey polyester cloth was scoured and tentered to prepare a polyester fabric for an airbag, and then the polyester fabric was coated with a liquid silicone rubber (LSR) resin by a knife over roll coating to manufacture a silicone resin-coated polyester fabric.

In this case, the warp weaving density and weft weaving density, weaving shape and resin coating amount of the polyester fabric are given in Table 7 below, and other conditions were based on general conditions for manufacturing a polyester fabric.

[Table 7]

| | Prep. Ex. 1 | Prep. Ex. 2 | Prep. Ex. 3 | Prep. Ex. 4 | Prep. Ex. 5 |
|---|---|---|---|---|---|
| Weaving density (warp x weft) | 49x49 | 49x49 | 49x49 | 43x43 | 43x43 |

(continued)

|  | Prep. Ex. 1 | Prep. Ex. 2 | Prep. Ex. 3 | Prep. Ex. 4 | Prep. Ex. 5 |
|---|---|---|---|---|---|
| Weaving shape | flat | flat | flat | flat | flat |
| Heat treatment /vulcanization (°C) | 180 | 185 | 190 | 185 | 190 |
| Rubber | liquid silicone | liquid silicone | liquid silicone | liquid silicone | liquid silicone |
| Resin coating amount (g/m$^2$) | 25 | 25 | 25 | 25 | 25 |

The physical properties of each of the polyester fabrics for an airbag, manufactured using the polyester yarns of Examples 1 to 5, were measured using the following method, and the results thereof are given in Table 8 below.

(a) Tensile strength and tensile elongation

The tensile strength and tensile elongation of each of the polyester fabrics, each of which is a noncoated polyester fabric, were measured as follows. The polyester fabric sample was heat-treated under conditions of 85°C and 65% RH for 4 hours and then cut, the polyester fabric sample was then fixed by the lower clamp of an tensile strength tester according to ISO 13934-1 (standard of the International Standardization Organization), and the upper clamp thereof moved upwardly, and thus the polyester fabric sample was broken. At this time, the tensile strengths and tensile elongations of the polyester fabric sample were measured in warp directions ($T^{wa}$, $S^{wa}$) and weft directions ($T^{we}$, $S^{we}$), respectively.

Meanwhile, the warpwise strength-elongation index ($TI^{wa}$) of the polyester fabric was calculated by Calculation Formula 5 below using the measured warpwise tensile strength ($T^{wa}$) and warpwise tensile elongation ($S^{wa}$) and the measured fineness (D) of the polyester yarn.

$$[\text{Calculation Formula 5}]$$

$$TI^{wa} = T^{wa}/(S^{wa} \times D)$$

Here, $T^{wa}$ is warpwise tensile strength (N) of the polyester fabric measured according to ISO 13934-1 (standard of the International Standardization Organization), $S^{wa}$ is warpwise tensile elongation (%) of the polyester fabric measured according to ISO 13934-1 (standard of the International Standardization Organization), and D is fineness (De) of a polyester yarn.

Further, the weftwise strength-elongation index ($TI^{we}$) of the polyester fabric was calculated by Calculation Formula 6 below using the measured weftwise tensile strength ($T^{we}$) and weftwise tensile elongation ($S^{we}$) and the measured fineness (D) of the polyester yarn.

$$[\text{Calculation Formula 6}]$$

$$TI^{we} = T^{we}/(S^{we} \times D)$$

Here, $T^{we}$ is weftwise tensile strength (N) of the polyester fabric measured according to ISO 13934-1 (standard of the International Standardization Organization), $S^{we}$ is weftwise tensile elongation (%) of the polyester fabric measured according to ISO 13934-1 (standard of the International Standardization Organization), and D is fineness (De) of a polyester yarn.

(b) Tear strength

The tear strength of an uncoated polyester fabric was measured according to ASTM D 2261 TONGUE (standard of the American Society for Testing and Materials).

First, an uncoated polyester fabric was cut to form a sample having a size of 75mm X 200mm, and the sample was located between the upper and lower jaws of a tear strength tester according to ASTM D 2261 TONGUE (standard of the American Society for Testing and Materials). Thereafter, the upper and lower jaws thereof moved in a direction opposite to each other based on the interval (76 mm) therebetween, that is, the upper jaw moved upward at a speed of 300 mm/min, and the lower jaw moved downward at a speed of 300 mm/min, and thus the sample was broken. At this time, the tear strength of the sample was measured.

(c) Edge comb resistance

The warpwise and weftwise end comb resistance ($ER^{wa}$, $ER^{we}$) of the polyester fabric, which is a noncoated polyester fabric, were measured by the method according to ASTM D 6479 (standard of the American Society for Testing and Materials) at room temperature after heat-treating a polyester fabric sample under conditions of 85°C and 65% RH for 4 hours and then cutting the heat-treated polyester fabric sample.

Meanwhile, the warpwise edge comb resistance index ($EI^{wa}$) of the polyester fabric was calculated by Calculation Formula 7 below using the measured warpwise edge comb resistance ($ER^{wa}$), warp density and weft density of the polyester fabric and the measured fineness (D) of the polyester yarn.

[Calculation Formula 7]

$$EI^{wa} = ER^{wa}/[(\text{warp density} + \text{weft density}) \times D^{1/2}]$$

Here, $ER^{wa}$ is warpwise edge comb resistance (N) of the polyester fabric measured according to ASTM D 6479 (standard of the American Society for Testing and Materials), and D is fineness (De) of a polyester yarn.

Further, the weftwise edge comb resistance index ($EI^{we}$) of the polyester fabric was calculated by Calculation Formula 8 below using the measured weftwise edge comb resistance ($ER^{we}$), warp density and weft density of the polyester fabric and the measured fineness (D) of the polyester yarn.

[Calculation Formula 8]

$$EI^{we} = ER^{we} /[(\text{warp density} + \text{weft density}) \times D^{1/2}]$$

Here, $ER^{we}$ is weftwise edge comb resistance (N) of the polyester fabric measured according to ASTM D 6479 (standard of the American Society for Testing and Materials), and D is fineness (De) of a polyester yarn.

(d) Toughness of polyester fabric

The toughness of the polyester fabric was calculated by Calculation Formula 9 below.

[Calculation Formula 9]

$$\text{Toughness (work of rupture)} = \int_0^{strain} F \cdot dl$$

Here, F indicates a load applied when the length of the polyester fabric increases by dl, and dl indicates the increased length of the polyester fabric.

In this case, the toughness of the polyester fabric was measured using a noncoated polyester fabric.

(e) Cover factor (CF)

The cover factor of the noncoated polyester fabric was calculated by Calculation Formula 10 below.

[Calculation Formula 10]

Cover factor (CF)

$$= \text{warp density(strand/inch)} \times \sqrt{(\text{warp denier})} + \text{weft density(strand/inch)} \times \sqrt{(\text{weft denier})}$$

(f) Contraction ratio of polyester fabric

The warpwise and weftwise contraction ratios of the polyester fabric were measured according to ASTM D 1776 (standard of the American Society for Testing and Materials). First, a noncoated polyester fabric was cut to a length of 20 cm (length before contracted) and then heat-treated in a chamber at 149°C for 1 hour, and then the length thereof was measured. Based on this measured length, the warpwise and weftwise contraction ratios of the polyester fabric were calculated by the Calculation Formula {(length before contracted - length after contracted)/ length before contracted x 100%}.

(g) Stiffness

The stiffness of the noncoated polyester fabric was measures by a circular bend method using a stiffness tester according to ASTM D 4032 (standard of the American Society for Testing and Materials). Further, the stiffness thereof may be measured by a cantilever method. Specifically, the stiffness thereof may be measured by measuring the length of the bent polyester fabric using a cantilever meter which is a tester inclined at a predetermined angle in order to bend the polyester fabric.

(h) Thickness

The thickness of the noncoated polyester fabric was measured according to ASTM D 1777 (standard of the American Society for Testing and Materials).

(i) Scrub resistance

The scrub resistance of the polyester fabric was evaluated using a scrub resistance tester (shown in FIG. 3) according to ISO 5981 (standard of the International Standardization Organization).
First, a coated polyester fabric was cut to form a polyester fabric sample, the polyester fabric sample was pressed, and both sides of the sample were repetitively scrubbed, and thus a coating layer was stripped from the sample. At this time, the number of scrubbings of the sample before the stripping of the coating layer was measured.
The scrub resistance of the polyester fabric is evaluated by measuring the total number of reciprocations of a scrubber. In this case, when a coating layer is not stripped after a scrubber reciprocates with respect to 50 strokes, it is indicated by "pass", thus continuing the reciprocation of the scrubber, and when the coating layer is stripped, it is indicated by "fail", thus stopping the reciprocation of the scrubber. The number of reciprocations of the scrubber at the time of the coating layer being stripped was measured.
When the number of reciprocations of the scrubber measured in this way is 600 or more, it is evaluated as "good", and when the number of reciprocations thereof is less than 600, it is evaluated as "poor".

(j) Air permeability

The static air permeability of the polyester fabric was evaluated by measuring the amount of air (ΔP: 125 Pa and 500 Pa) permeating the circular section (area: 38 cm$^2$) of a noncoated polyester fabric after leaving the noncoated polyester fabric under conditions of 20°C and 65% RH for 1 day or more according to ASTM D 737 (standard of the American Society for Testing and Materials).
Further, the dynamic air permeability of the noncoated polyester fabric was measured using a dynamic air permeability tester (TEXTEST FX 3350) according to ASTM D 6476 (standard of the American Society for Testing and Materials).

[Table 8]

|  | Prep. Ex. 1 | Prep. Ex. 2 | Prep. Ex. 3 | Prep. Ex. 4 | Prep. Ex. 5 |
|---|---|---|---|---|---|
| Warpwise tensile strength ($T^{wa}$, N/5cm) | 3,050 | 3,130 | 3,180 | 4,100 | 4,150 |
| Warpwise tensile elongation ($S^{wa}$, %) | 28.9 | 30.3 | 32.3 | 30.5 | 32 |
| Warpwise strength-elongation index ($TI^{wa}$) | 0.251 | 0.246 | 0.246 | 0.224 | 0.216 |

(continued)

| | Prep. Ex. 1 | Prep. Ex. 2 | Prep. Ex. 3 | Prep. Ex. 4 | Prep. Ex. 5 |
|---|---|---|---|---|---|
| Weftwise tensile strength ($T^{we}$, N/5cm) | 3,130 | 3,220 | 3,270 | 4,300 | 4,400 |
| Weftwise tensile elongation ($S^{we}$, %) | 26.7 | 27.0 | 29.5 | 31.5 | 33.5 |
| Weftwise strength-elongation index ($TI^{we}$) | 0.267 | 0.269 | 0.253 | 0.228 | 0.219 |
| Toughness of polyester fabric ($kJ/m^3$) | 3.75 | 3.83 | 3.92 | 5.4 | 5.6 |
| Tear strength(kgf)/coating of polyester fabric | 36 | 37 | 38 | 38 | 40 |
| Warpwise edge comb resistance ($ER^{wa}$, N) | 398 | 415 | 427 | 550 | 570 |
| Warpwise edge comb resistance index ($EI^{wa}$) | 0.198 | 0.207 | 0.213 | 0.261 | 0.271 |
| Weftwise edge comb resistance ($ER^{we}$, N) | 409 | 432 | 446 | 576 | 592 |
| Weftwise edge comb resistance index ($EI^{we}$) | 0.204 | 0.215 | 0.222 | 0.273 | 0.281 |
| Cover factor of polyester fabric | 2,008 | 2,008 | 2,008 | 2,107 | 2,107 |
| Contraction ratio (%) | Warp | 0.5 | 0.5 | 0.4 | 0.4 | 0.5 |
| | Weft | 0.3 | 0.3 | 0.4 | 0.3 | 0.3 |
| Stiffness (kgf) | 0.40 | 0.40 | 0.38 | 1.00 | 0.90 |
| Thickness (mm) | 294 | 294 | 295 | 338 | 338 |
| Number of scrub (times) | 1,000 | 1,050 | 1,100 | 1,050 | 1,150 |
| Evaluation of scrub resistance | good | good | good | good | good |
| Static air permeability (cfm) | ΔP = 125 pa | 1.0 | 0.9 | 0.8 | 0.6 | 0.6 |
| | ΔP = 500pa | 9.5 | 9.3 | 9.2 | 5.4 | 5.4 |
| Dynamic air permeability (mm/s) | 620 | 610 | 590 | 450 | 430 |

Comparative Preparation Examples 1 to 5

Polyester fabrics of Comparative Preparation Examples 1 to 5 were manufactured, and the physical properties thereof were measured in the same manner as in Preparation Examples 1 to 5, except that the polyester yarns of Comparative Examples 1 to 5 were used instead of the polyester yarns of Examples 1 to 5. The results thereof are given in Table 9 below.

[Table 9]

| | Comp. Prep. Ex. 1 | Comp. Prep. Ex. 2 | Comp. Prep. Ex. 3 | Comp. Prep. Ex. 4 | Comp. Prep. Ex. 5 |
|---|---|---|---|---|---|
| Warpwise tensile strength ($T^{wa}$, N/5cm) | 2,350 | 2,400 | 2,450 | 3,320 | 3,380 |
| Warpwise tensile elongation ($S^{wa}$, %) | 13 | 14 | 14 | 13 | 14 |

(continued)

| | Comp. Prep. Ex. 1 | Comp. Prep. Ex. 2 | Comp. Prep. Ex. 3 | Comp. Prep. Ex. 4 | Comp. Prep. Ex. 5 |
|---|---|---|---|---|---|
| Warpwise strength-elongation index ($TI^{wa}$) | 0.430 | 0.408 | 0.417 | 0.426 | 0.402 |
| Weftwise tensile strength ($T^{we}$, N/5cm) | 2,380 | 2,430 | 2,480 | 3,600 | 3,410 |
| Weftwise tensile elongation ($S^{we}$, %) | 13 | 14 | 14 | 13 | 14 |
| Weftwise strength-elongation index ($TI^{we}$) | 0.436 | 0.413 | 0.422 | 0.431 | 0.406 |
| Toughness of polyester fabric ($kJ/m^3$) | 2.5 | 2.7 | 2.9 | 2.7 | 2.9 |
| Tear strength (kgf)/coating of polyester fabric | 19 | 21 | 21 | 23 | 24 |
| Warpwise edge comb resistance ($ER^{wa}$, N) | 270 | 280 | 285 | 320 | 327 |
| Warpwise edge comb resistance index ($EI^{wa}$) | 0.128 | 0.133 | 0.136 | 0.143 | 0.146 |
| Weftwise edge comb resistance ($ER^{we}$, N) | 275 | 283 | 290 | 325 | 332 |
| Weftwise edge comb resistance index ($EI^{we}$) | 0.131 | 0.135 | 0.138 | 0.145 | 0.148 |
| Cover factor of polyester fabric | 2,054 | 2,054 | 2,054 | 2,243 | 2,243 |
| Contraction ratio (%) Warp | 1.3 | 1.3 | 1.2 | 1.2 | 1.1 |
| Contraction ratio (%) Weft | 1.2 | 1.0 | 0.9 | 1.0 | 0.9 |
| Stiffness (kgf) | 1.78 | 1.76 | 1.80 | 2.3 | 2.3 |
| Thickness (mm) | 288 | 288 | 288 | 350 | 350 |
| Number of scrubbings (times) | 350 | 350 | 350 | 450 | 450 |
| Evaluation of scrub resistance | poor | poor | poor | poor | poor |

(continued)

|  |  | Comp. Prep. Ex. 1 | Comp. Prep. Ex. 2 | Comp. Prep. Ex. 3 | Comp. Prep. Ex. 4 | Comp. Prep. Ex. 5 |
|---|---|---|---|---|---|---|
| Static air permeability (cfm) | $\Delta P$ = 125 pa | 2.7 | 2.8 | 2.8 | 2.2 | 2.1 |
|  | $\Delta P$ = 500 pa | 14.0 | 14.2 | 14.1 | 12.6 | 12.5 |
| Dynamic air permeability (mm/s) |  | 2,150 | 2,150 | 2,200 | 1,950 | 1,850 |

As given in Table 8 above, it can be ascertained that the polyester fabrics of Preparation Examples 1 to 5, which were made of the polyester yarns of Examples 1 to 5 having tensile strength range and tensile elongation range optimized at room temperature and under severe conditions of high temperature and high humidity, have a toughness of 3.75 to 5.6 and a tear strength (noncoated polyester fabric) of 36 to 40 kgf, thus exhibiting excellent mechanical properties for sufficiently enduring high-temperature and high-pressure inflator gas at the time of an airbag being deployed. Further, it can be ascertained that the warpwise and weftwise contraction ratios the polyester fabrics of Preparation Examples 1 to 5 are 0.4% to 0.5% and 0.3% to 0.4%, respectively. Further, it can be ascertained that the polyester fabrics of Preparation Examples 1 to 5 have an optimum stiffness range of 0.38 to 1.0 kgf, thus exhibiting excellent shape stability, foldability and storability.

Particularly, it can be ascertained that the polyester fabrics of Preparation Examples 1 to 5 have static air permeability (noncoated polyester fabric) of 0.6 to 1.0 cfm at $\Delta P$ = 125 pa and static air permeability (noncoated polyester fabric) of 5.4 to 9.5 cfm at $\Delta P$ = 500 pa, thus exhibiting excellent airtightness. Further, it can be ascertained that the cover factors of the polyester fabrics of Preparation Examples 1 to 5 are low compared to those of the polyester fabrics of Comparative Preparation Examples 1 to 5, but the edge comb resistance values thereof at 25°C and 90°C are 430 to 535 N and 380 to 495 N, respectively, and thus a phenomenon of the outer seams of an airbag cushion being tensioned at the time of an airbag being deployed can be improved.

In contrast, as given in Table 9 above, it can be ascertained that the polyester fabrics of Comparative Preparation Examples 1 to 5, which were made of the polyester yarns of Comparative Examples 1 to 5, cannot satisfy the above-mentioned characteristics. Particularly, it can be ascertained that the polyester fabrics of Comparative Preparation Examples 1 to 5 have warpwise and weftwise contractions of 0.9% to 1.3%, tensile strength of 182 to 198 kgf/inch and tear strength of 13 to 20 kgf, which are remarkably low compared to those of the polyester fabrics of Preparation Examples 1 to 5. As such, when a polyester fabric having poor mechanical properties such as tensile strength, tear strength and the like is used for an airbag, there may be a problem of an airbag being broken at the time of the airbag being deployed.

Further, it can be ascertained that the polyester fabrics of Comparative Preparation Examples 1 to 5 have static air permeability (noncoated polyester fabric) of 2.1 to 2.4 cfm at $\Delta P$ = 125 pa and static air permeability (noncoated polyester fabric) of 12.5 to 13.5 cfm at $\Delta P$ = 500 pa, which are very high compared to those of the polyester fabrics of Preparation Examples 1 to 5, and thus the airtightness thereof is low compared to those of the polyester fabrics of Preparation Examples 1 to 5. As such, when the air permeability of a polyester fabric increases, there is a problem in that air is easily discharged from an airbag at the time of the airbag being deployed, thus not sufficiently performing the function of an airbag. Further, it can be ascertained that the cover factors of the polyester fabrics of Comparative Preparation Examples 1 to 5 are high compared to those of the polyester fabrics of Preparation Examples 1 to 5, but the edge comb resistance values thereof at 25°C and 90°C are 270 to 327 N and 255 to 298 N, respectively, which are low compared to those of the polyester fabrics of Preparation Examples 1 to 5, and thus a phenomenon of the outer seams of an airbag cushion being tensioned at the time of an airbag being deployed may occur, thereby not assuring the safety of an occupant.

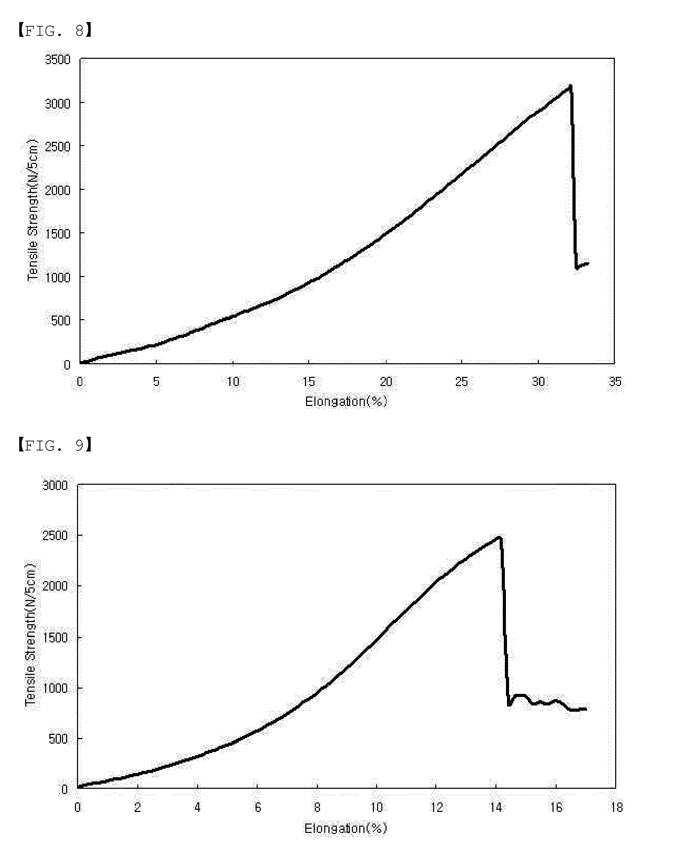

Meanwhile, the strength-elongation curves of the polyester fabrics of Preparation Example 3 and Comparative Preparation Example 3 are shown in FIG. 8 and FIG. 9, respectively. As shown in FIG. 8, it can be ascertained that the polyester fabric of Preparation Example 3 exhibits high toughness. In contrast, as shown in FIG. 9, it can be ascertained that the polyester fabric of Comparative Preparation Example 3 exhibits low toughness. Therefore, the polyester fabric of Preparation Example 3 is advantageous in that the ability of an airbag to absorb high-temperature and high-pressure inflator gas energy at the time of the airbag being deployed is excellent, and the airtightness of an airbag is also excellent. However, the polyester fabric of Comparative Preparation Example 3 is disadvantageous in that an airbag cannot sufficiently absorb the impact energy of the exhaust gas discharged at the time of deploying the airbag, and the air blocking effect of the airbag becomes poor, so this polyester fabric is not suitable to be used for a fabric for an airbag.

Test Example 1

Driver airbag (DAB) cushions and passenger airbag (PAB) cushions were manufactured using the noncoated polyester fabrics of Preparation Examples 1 to 5 and Comparative Preparation Examples 1 to 5, and, as given in Table 10, airbags for automobiles were manufactured using the driver airbag (DAB) cushions and passenger airbag (PAB) cushions. Static tests of the airbags for automobiles were carried out under three heat treatment conditions (room temperature: 25 °C x 4 hr, left in oven, Hot: 85 °C x 4 hr, left in oven, Cold: - 30 °C x 4 hr, left in oven). As the results of the static tests, when the polyester fabric is not torn, pinholes are not formed and the polyester fabric is not carbonized, it is evaluated as "Pass", and when at least one of the polyester fabric being torn, pinholes being formed and the polyester fabric being carbonized occurs, it was evaluated as "Fail".

The results of static tests of the airbag cushions manufactured using the noncoated polyester fabrics of Preparation Examples 1 to 5 and Comparative Preparation Examples 1 to 5 are given in Table 10 below.

[Table 10]

| | Spec of cushion | Gunpowder inflator pressure (kPa) | Static test at room temperature | Hot static test | Cold static test |
|---|---|---|---|---|---|
| Prep. Ex. 1 | DAB | 190 | Pass | Pass | Pass |
| Prep. Ex. 2 | DAB | 190 | Pass | Pass | Pass |
| Prep. Ex. 3 | DAB | 190 | Pass | Pass | Pass |
| Prep. Ex. 4 | PAB | 330 | Pass | Pass | Pass |
| Prep. Ex. 5 | PAB | 330 | Pass | Pass | Pass |
| Comp. Prep. Ex. 1 | DAB | 190 | Fail | Fail | Fail |
| Comp. Prep. Ex. 2 | DAB | 190 | Fail | Fail | Fail |
| Comp. Prep. Ex. 3 | DAB | 190 | Fail | Fail | Fail |
| Comp. Prep. Ex. 4 | PAB | 330 | Fail | Fail | Fail |
| Comp. Prep. Ex. 5 | PAB | 330 | Fail | Fail | Fail |

As given in Table 10 above, as the results of static tests of the airbags for automobiles, including the polyester fabrics of Preparation Examples 1 to 5 manufactured using the polyester yarns of Examples 1 to 5 whose tensile strength range and tensile elongation range were optimized at room temperature and under severe conditions of high temperature and high humidity, wherein the static tests were carried out after each of the airbags had been left in an oven under three heat treatment conditions, it can be ascertained that all of the airbags have excellent performance as airbags for automobiles because their polyester fabrics were not torn, pinholes were not formed and their polyester fabrics were not carbonized.

In contrast, from the results of the airbags for automobiles, including the polyester fabrics of Comparative Preparation Examples 1 to 5 manufactured using the polyester yarns of Comparative Examples 1 to 5, it can be ascertained that all of the airbags was evaluated as "Fail" because the polyester fabric being torn, pinholes being formed or the polyester fabric being carbonized occurred, so these airbags cannot be practically used as airbags for automobiles. Particularly, it can be ascertained that, in the static tests of the DAB (driver airbag) cushion assemblies including the polyester fabrics of Comparative Preparation Examples 1, 2 and 3, the polyester fabric of the outer seam of each of the airbag cushions was torn, in the static test of the DAB (driver airbag) cushion assembly including the polyester fabric of Comparative Preparation Example 4, the polyester fabric of the inlet of an inflator thereof was torn, and in the static test of the DAB (driver airbag) cushion assembly including the polyester fabric of Comparative Preparation Example 5, the polyester fabric of the seam of a main panel thereof was torn.

Further, from the results of the airbags for automobiles, including the polyester fabrics of Comparative Preparation Examples 1 to 5, it can be ascertained that each of the polyester fabrics was torn because of the phenomena of pinholes being formed and the polyester fabric being carbonized, and the like. Therefore, when the polyester fabrics of Comparative Preparation Examples 1 to 5 are applied to airbag cushions for an automobile, airbags are ruptured, thus severely deteriorating the functions of the airbags.

**Claims**

1. A polyester yarn, wherein a room-temperature strength-elongation index ($X^0$) indicating a ratio ($T°/S°$) of tensile strength ($T°$) to tensile elongation ($S°$) of the polyester yarn, measured at room temperature; and a primary high-humidity strength-elongation index ($X^1$) indicating a ratio ($T^1/S^1$) of tensile strength ($T^1$) to tensile elongation ($S^1$) of the polyester yarn, measured after heat-treating the polyester yarn under conditions of a temperature of 85°C and a relative humidity (RH) of 95±5% for 168 hours, are represented by Calculation Formula 1 below:

[Calculation Formula 1]

$$0.65 \leq X^1/X^0 \leq 0.93$$

wherein $X^0$ is a room-temperature strength-elongation index indicating a ratio ($T°/S°$) of tensile strength ($T°$) to tensile elongation ($S°$) of the polyester yarn, measured at room temperature; and
$X^1$ is a primary high-humidity strength-elongation index indicating a ratio ($T^1/S^1$) of tensile strength ($T^1$) to tensile elongation ($S^1$) of the polyester yarn, measured after heat-treating the polyester yarn under conditions of a temperature of 85°C and a relative humidity (RH) of 95±5% for 168 hours.

2. The polyester yarn of claim 1, wherein a room-temperature strength-elongation index ($X^0$) indicating a ratio ($T^0/S^0$) of tensile strength ($T°$) to tensile elongation ($S°$) of the polyester yarn, measured at room temperature; and a secondary high-humidity strength-elongation index ($X^2$) indicating a ratio ($T^2/S^2$) of tensile strength ($T^2$) to tensile elongation ($S^2$) of the polyester yarn, measured after heat-treating the polyester yarn under conditions of a temperature of 85°C and a relative humidity (RH) of 95±5% for 360 hours, are represented by Calculation Formula 2 below:

[Calculation Formula 2]

$$0.65 \leq X^2/X^0 \leq 0.93$$

wherein $X^0$ is a room-temperature strength-elongation index indicating a ratio ($T°/S°$) of tensile strength ($T°$) to tensile elongation ($S°$) of the polyester yarn, measured at room temperature; and
$X^2$ is a secondary high-humidity strength-elongation index indicating a ratio ($T^2/S^2$) of tensile strength ($T^2$) to tensile elongation ($S^2$) of the polyester yarn, measured after heat-treating the polyester yarn under conditions of a temperature of 85°C and a relative humidity (RH) of 95±5% for 360 hours.

3. The polyester yarn of claim 1, wherein a room-temperature strength-elongation index ($X^0$) indicating a ratio ($T°/S°$) of tensile strength ($T°$) to tensile elongation ($S°$) of the polyester yarn, measured at room temperature; and a tertiary high-humidity strength-elongation index ($X^3$) indicating a ratio ($T^3/S^3$) of tensile strength ($T^3$) to tensile elongation ($S^3$) of the polyester yarn, measured after heat-treating the polyester yarn under conditions of a temperature of 85°C and a relative humidity (RH) of 95±5% for 504 hours, are represented by Calculation Formula 3 below:

[Calculation Formula 3]

$$0.65 \leq X^3/X^0 \leq 0.93$$

wherein $X^0$ is a room-temperature strength-elongation index indicating a ratio ($T°/S°$) of tensile strength ($T°$) to tensile elongation ($S°$) of the polyester yarn, measured at room temperature; and
$X^3$ is a tertiary high-humidity strength-elongation index indicating a ratio ($T^3/S^3$) of tensile strength ($T^3$) to tensile elongation ($S^3$) of the polyester yarn, measured after heat-treating the polyester yarn under conditions of a temperature of 85°C and a relative humidity (RH) of 95±5% for 504 hours.

4. The polyester yarn of claim 1, wherein a Young's modulus of the polyester yarn measured according to ASTM D 885 is 60 to 110 g/de at an elongation of 1%, and is 50 to 87 g/de at an elongation of 2%.

5. The polyester yarn of claim 1, wherein the polyester yarn has a toughness of 70 J/m$^3$ to 120 J/m$^3$, which is represented by Calculation Formula 4 below:

[Calculation Formula 4]

$$\text{Toughness (work of rupture)} = \int_0^{strain} F \cdot dl$$

wherein F indicates a load applied when a length of the polyester yarn is increased by dl.

**6.** The polyester yarn of claim 1, wherein the polyester yarn has a dry contraction ratio of 1.0% or more.

**7.** The polyester yarn of claim 1, wherein the polyester yarn has degree of crystallization of 40% to 55%.

**8.** The polyester yarn of claim 1, wherein the polyester yarn has total linear density of 400 to 650 denier.

**9.** The polyester yarn of claim 1, wherein the polyester yarn has single yarn linear density of 2.5 to 6.8 DPF and includes 96 to 160 filaments.

**10.** A method of manufacturing the polyester yarn of any one of claims 1 to 9, comprising the steps of:

melt-spinning a polyethylene terephthalate polymer having an intrinsic viscosity of 1.2 dl/g or more at 270 to 320°C to prepare an undrawn polyester yarn; and
drawing the undrawn polyester yarn.

**11.** The method of claim 10, wherein the difference in intrinsic viscosity between the polyethylene terephthalate polymer and the polyester yarn is 0.7 dl/g or less.

**12.** The method of claim 10, wherein the step of drawing the undrawn polyester yarn is performed such that a total draw ratio is 5.0 to 6.5.

**13.** The method of claim 10, further comprising the step of performing a heat fixation process at a temperature of 170 to 250°C after the step of drawing the undrawn polyester yarn.

**14.** The method of claim 10, further comprising the step of performing a relaxation process at a relaxation ratio of 14% or less after the step of drawing the undrawn polyester yarn.

**15.** A polyester fabric, comprising the polyester yarn of any one of claims 1 to 9.

**16.** The polyester fabric of claim 15, having a warpwise strength-elongation index ($TI^{wa}$) of 0.18 to 0.38 measured after heat-treating the polyester fabric under conditions of a temperature of 85°C and a relative humidity (RH) of 65% for 4 hours and represented by Calculation Formula 5 below:

[Calculation Formula 5]

$$TI^{wa} = T^{wa}/(S^{wa} \times D)$$

wherein $T^{wa}$ is warpwise tensile strength (N) of the polyester fabric measured according to ISO 13934-1,
$S^{wa}$ is warpwise tensile elongation (%) of the polyester fabric measured according to ISO 13934-1, and
D is fineness (De) of a polyester yarn.

**17.** The polyester fabric of claim 15, having a weftwise strength-elongation index ($TI^{we}$) of 0.18 to 0.38 measured after heat-treating the polyester fabric under conditions of a temperature of 85°C and a relative humidity (RH) of 65% for 4 hours and represented by Calculation Formula 6 below:

[Calculation Formula 6]

$$TI^{we} = T^{we}/(S^{we} \times D)$$

wherein $T^{we}$ is weftwise tensile strength (N) of the polyester fabric measured according to ISO 13934-1,
$S^{we}$ is weftwise tensile elongation (%) of the polyester fabric measured according to ISO 13934-1, and
D is fineness (De) of a polyester yarn.

18. The polyester fabric of claim 15, having a warpwise edge comb resistance index ($EI^{wa}$) of 0.15 to 0.38 measured after heat-treating the polyester fabric under conditions of a temperature of 85°C and a relative humidity (RH) of 65% for 4 hours and represented by Calculation Formula 7 below:

[Calculation Formula 7]

$$EI^{wa} = ER^{wa}/[(\text{warp density} + \text{weft density}) \times D^{1/2}]$$

wherein $ER^{wa}$ is warpwise edge comb resistance (N) of the polyester fabric measured according to ASTM D 6479, and
D is fineness (De) of a polyester yarn.

19. The polyester fabric of claim 15, having a weftwise edge comb resistance index ($EI^{we}$) of 0.15 to 0.38 measured after heat-treating the polyester fabric under conditions of a temperature of 85°C and a relative humidity (RH) of 65% for 4 hours and represented by Calculation Formula 8 below:

[Calculation Formula 8]

$$EI^{we} = ER^{we}/[(\text{warp density} + \text{weft density}) \times D^{1/2}]$$

wherein $ER^{we}$ is weftwise edge comb resistance (N) of the polyester fabric measured according to ASTM D 6479, and
D is fineness (De) of a polyester yarn.

20. The polyester fabric of claim 15, wherein the polyester fabric has a toughness of 3.5 J/m$^3$ or more, which is represented by Calculation Formula 9 below:

[Calculation Formula 9]

$$\text{Toughness (work of rupture)} = \int_0^{strain} F \cdot dl$$

wherein F indicates a load applied when a length of the polyester fabric increases by dl.

21. The polyester fabric of claim 1, wherein the polyester fabric has a cover factor (CF) of 1,800 to 2,460, which is represented by Calculation Formula 10 below:

[Calculation Formula 10]

Cover factor (CF)

$$= \text{warp density(strand/inch)} \times \sqrt{(\text{warp denier})} + \text{weft density(strand/inch)} \times \sqrt{(\text{weft denier})}$$

22. The polyester fabric of claim 15, wherein stiffness of the polyester fabric according to ASTM D 4032 is 1.5 kgf or less.

23. The polyester fabric of claim 15, wherein static air permeability of the polyester fabric according to ASTM D 737 is 10 cfm or less when ΔP is 125 Pa, and is 14 cfm or less when ΔP is 500 Pa.

24. The polyester fabric of claim 15, wherein dynamic air permeability of the polyester fabric according to ASTM D 737 is 1,700 mm/s or less.

25. The polyester fabric of claim 15, wherein edge comb resistance of the polyester fabric, measured at room temperature (25°C) according to ASTM D 6479, is 350 N or more, and edge comb resistance of the polyester fabric, measured at 90°C according to ASTM D 6479, is 300 N or more.

26. The polyester fabric of claim 15, wherein the polyester fabric includes a polyester yarn having a tensile strength of 8.1 to 9.5 g/d and a cutting elongation of 20 to 35%, which is measured after heat-treating the polyester yarn at 185°C for 2 minutes.

27. The polyester fabric of claim 15, wherein the polyester fabric includes a polyester yarn having a Young's modulus of 55 to 70 g/de at an elongation of 1% and having a Young's modulus of 35 to 52 g/de at an elongation of 2%, which is measured according to ASTM D 885 after heat-treating the polyester yarn at 185°C for 2 minutes.

28. The polyester fabric of claim 15, wherein the polyester fabric is coated with at least one rubber component selected from the group consisting of powdered silicone, liquid silicone, polyurethane, chloroprene, neoprene rubber, and emulsified silicone.

29. The polyester fabric of claim 25, wherein an amount of the rubber component per unit area of the polyester fabric is 20 to 200 g/m$^2$.

30. A method of manufacturing the polyester fabric of claim 15, comprising the steps of:

weaving a polyester yarn having a fineness of 400 to 650 denier to form a grey cloth for an airbag;
scouring the grey cloth for an airbag; and
heat setting the scoured grey cloth.

31. The method of claim 30, wherein, in the step of heat setting the scoured grey cloth, heat treatment temperature is 140 to 210°C.

32. An airbag for an automobile, comprising the polyester fabric of claim 15.

33. The airbag of claim 32, wherein the airbag is a frontal airbag or a side curtain airbag.

【FIG. 1】

【FIG. 2】

【FIG. 3】

【FIG. 4】

【FIG. 5】

【FIG. 6】

【FIG. 7】

【FIG. 8】

【FIG. 9】

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H04214437 B